# EUROPEAN PATENT APPLICATION

(11) **EP 4 212 025 A1**
(43) Date of publication of application: **19.07.2023**
(21) Application number: 21866874.7
(22) Date of filing: 10.09.2021
(51) Int. Cl.: A23L 27/00, A23L 27/20

(54) **MOUTH-COATING FEEL ENHANCER**

(30) Priority: 11.09.2020 JP 2020152962
(71) Applicant: AJINOMOTO CO., INC., Chuo-ku Tokyo 104-8315 (JP)
(72) Inventor: MIURA, Yoshimasa, Kawasaki-shi, Kanagawa 210-8681 (JP); SAKAMOTO, Kazuhiro, Kawasaki-shi, Kanagawa 210-8681 (JP); KITAJIMA, Seiji, Kawasaki-shi, Kanagawa 210-8681 (JP)
(74) Representative: Strehl Schübel-Hopf & Partner
(86) International application number: PCT/JP2021/033377
(87) International publication number: WO 2022/054917

(57) **Abstract**

The present invention aims to provide an effective mouth-coating feel enhancer.

The present invention relates to a mouth-coating feel enhancer comprising an in-oil-heated substance of cyclotene, an in-oil-heated substance of a cyclotene analogous compound, or an in-oil-heated substance of a substance capable of producing cyclotene or a cyclotene analogous compound by heating.

## Description

### [Technical Field]

The present invention relates to a mouth-coating feel enhancer and a production method thereof. The present invention also relates to a food with an enhanced mouth-coating feel and a production method thereof, and a method for enhancing a mouth-coating feel.

### [Background Art]

The "mouth-coating feel" is the sensation that the oral cavity is covered with a thin film, the sensation that the oral cavity is covered with oil or fat, or an oil or fat-like film, a smooth sensation that is felt in the oral cavity, and an oil or fat-like rich sensation (thickness) that spreads throughout the oral cavity, each of which is noticeably felt when a oil or fat, or a solution or food containing oil or fat is contained in the oral cavity. If there is a method that can easily enhance the mouth-coating feel, for example, even a small amount of oil or fat can sufficiently provide a favorable sensation that is noticeably felt when oil, fat, or the like is contained in the oral cavity. Thus, the method is considered to afford advantages such as suppression of excessive calorie intake, expected effect in preventing metabolic diseases such as obesity, and the like.

Conventionally, as the methods for enhancing the mouth-coating feel, methods utilizing hydrocolloids, low-molecular-weight compounds, polyphenols or glycosides (non-patent documents 1 to 5) and the like have been reported. However, there is a problem that the sensation enhanced by any of these methods is different in quality from the mouth-coating feel that is noticeably felt when oil, fat or the like is contained in the oral cavity. In addition, even though the aroma of oils and fats is imparted by a method of imparting the aroma of oils and fats by using an aroma component (e.g., fatty acid, lactones etc.), the mouth-coating feel is not enhanced. Even though the viscosity is enhanced by a method of potentiating viscosity by using a thickener such as polysaccharide or the like, the mouth-coating feel is not enhanced.

### [Citation List]

### [Non Patent Literature]

[NPL 1]
   Arocas et al., "Sensory properties determined by starch type in white sauces: effects of freeze/thaw and hydrocolloid addition." J Food Sci 2010, 75:S132-S140.
[NPL 2]
   Flett et al., "Perceived creaminess and viscosity of aggregated particles of casein micelles and κ-carrageenan." J Food Sci 2010, 75:S255-S261.
[NPL 3]
   Dawid et al., "Identification of sensory-active phytochemicals in asparagus (Asparagus officinalis L.)." J Agric Food Chem 2012, 60:11877-11888.
[NPL 4]
   Schwarz et al., "Identification of novel orosensory active molecules in cured vanilla beans (Vanilla planifolia)." J Agric and Food Chem 2009, 57:3729-3737.
[NPL 5]
   Scharbert et al., "Identification of the astringent taste compounds in black tea infusions by combining instrumental analysis and human bioresponse." J Agric and Food Chem 2004, 52:3498-3508.

### [Summary of Invention]

### [Technical Problem]

The present invention has been made in view of the aforementioned situation, and the problem to be solved thereby is provision of a mouth-coating feel enhancer that can effectively enhance a mouth-coating feel, a food with an effectively enhanced mouth-coating feel and a production method thereof, a method for effectively enhancing a mouth-coating feel, and the like.

### [Solution to Problem]

The present inventors have conducted intensive studies of the above-mentioned problems and found that a substance obtained by heating cyclotene in an oil- or fat-containing composition (i.e., in-oil-heated substance) can enhance the mouth-coating feel. The present inventors have also found that an in-oil-heated substance of a cyclotene analogous compound, and an in-oil-heated substance of a substance capable of producing cyclotene or a cyclotene analogous compound by heating can enhance the mouth-coating feel. The present inventors have conducted further studies based on such findings and completed the present invention.

That is, the present invention provides the following.
[1] A mouth-coating feel enhancer comprising an in-oil-heated substance of cyclotene, an in-oil-heated substance of a cyclotene analogous compound, or an in-oil-heated substance of a substance capable of producing cyclotene or a cyclotene analogous compound by heating.
[2] The mouth-coating feel enhancer of [1], wherein the cyclotene analogous compound is a compound (excluding cyclotene) represented by the formula (I): 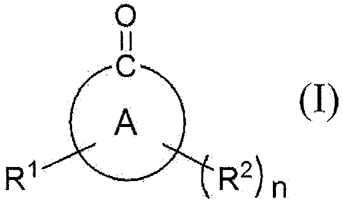 wherein
   ring A is a 5-membered or 6-membered, saturated or unsaturated, carbocycle or oxygen-containing or nitrogen-containing heterocycle;
   R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
   R² is a hydrocarbon group having 1 - 8 carbon atoms, a hydroxy group, or a hydrogen atom; and
   n is an integer of 1 to 3.
[3] The mouth-coating feel enhancer of [1] or [2], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadien-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.
[4] The mouth-coating feel enhancer of any one of [1] to [3], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, dihydro-5-octyl-2(3H)-furanone, 6-heptyltetrahydro-2H-pyran-2-one, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, (1R,4R)-1,7,7-trimethyl-bicyclo[2.2.1]heptan-2-one, (5R)-2-methyl-5-(1-methylethenyl)-2-cyclohexen-1-one, 2,5-dimethyl-4-methoxy-3(2H)-furanone, D-erythro-hex-2-enonic acid γ-lactone, 3,4-dimethyl-1,2-cyclopentanedione, 3,4-dihydro-2H-1-benzopyran-2-one, and 3-propylidene-1(3H)-isobenzofuranone.
[5] The mouth-coating feel enhancer of any one of [1] to [4], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, and maltol.
[6] The mouth-coating feel enhancer of any one of [1] to [5], wherein the substance capable of producing cyclotene or a cyclotene analogous compound by heating comprises at least one saccharide selected from the group consisting of ribose, xylose, arabinose, glucose, fructose, sucrose, maltose, and lactose.
[7] The mouth-coating feel enhancer of [6], wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.
[8] The mouth-coating feel enhancer of any one of [1] to [7], further comprising a heated substance of β-caryophyllene or a heated substance of a β-caryophyllene analogous compound.
[9] The mouth-coating feel enhancer of any one of [1] to [8], wherein the enhancer is for a food containing oil or fat.
[10] A method for enhancing a mouth-coating feel, comprising adding an in-oil-heated substance of cyclotene, an in-oil-heated substance of a cyclotene analogous compound, or an in-oil-heated substance of a substance capable of producing cyclotene or a cyclotene analogous compound by heating.
[11] The enhancing method of [10], wherein the cyclotene analogous compound is a compound (excluding cyclotene) represented by the formula (I): 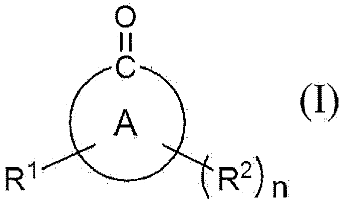 wherein
   ring A is a 5-membered or 6-membered, saturated or unsaturated, carbocycle or oxygen-containing or nitrogen-containing heterocycle;
   R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
   R² is a hydrocarbon group having 1 - 8 carbon atoms, a hydroxy group, or a hydrogen atom; and
   n is an integer of 1 to 3.
[12] The enhancing method of [10] or [11], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadiene-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.
[13] The enhancing method of any one of [10] to [12], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, dihydro-5-octyl-2(3H)-furanone, 6-heptyltetrahydro-2H-pyran-2-one, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, (1R,4R)-1,7,7-trimethyl-bicyclo[2.2.1]heptan-2-one, (5R)-2-methyl-5-(1-methylethenyl)-2-cyclohexen-1-one, 2,5-dimethyl-4-methoxy-3(2H)-furanone, D-erythro-hex-2-enonic acid γ-lactone, 3,4-dimethyl-1,2-cyclopentanedione, 3,4-dihydro-2H-1-benzopyran-2-one, and 3-propylidene-1(3H)-isobenzofuranone.
[14] The enhancing method of any one of [10] to [13], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, and maltol.
[15] The enhancing method of any one of [10] to [14], wherein the substance capable of producing cyclotene or a cyclotene analogous compound by heating comprises at least one saccharide selected from the group consisting of ribose, xylose, arabinose, glucose, fructose, sucrose, maltose, and lactose.
[16] The enhancing method of [15] wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.
[17] The enhancing method of any one of [10] to [16], further comprising adding a heated substance of β-caryophyllene or a heated substance of a β-caryophyllene analogous compound.
[18] The enhancing method of any one of [10] to [17], wherein the method is a method for enhancing a mouth-coating feel of a food containing oil or fat.
[19] A method for producing a food, comprising adding an in-oil-heated substance of cyclotene, an in-oil-heated substance of a cyclotene analogous compound, or an in-oil-heated substance of a substance capable of producing cyclotene or a cyclotene analogous compound by heating.
[20] The production method of [19], wherein the cyclotene analogous compound is a compound (excluding cyclotene) represented by the formula (I): 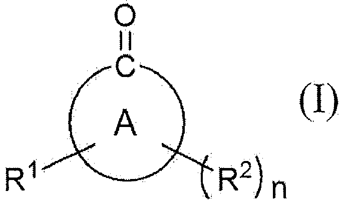 wherein
   ring A is a 5-membered or 6-membered, saturated or unsaturated, carbocycle or oxygen-containing or nitrogen-containing heterocycle;
   R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
   R² is a hydrocarbon group having 1 - 8 carbon atoms, a hydroxy group, or a hydrogen atom; and
   n is an integer of 1 to 3.
[21] The production method of [19] or [20], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadiene-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.
[22] The production method of any one of [19] to [21], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, dihydro-5-octyl-2(3H)-furanone, 6-heptyltetrahydro-2H-pyran-2-one, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, (1R,4R)-1,7,7-trimethyl-bicyclo[2.2.1]heptan-2-one, (5R)-2-methyl-5-(1-methylethenyl)-2-cyclohexen-1-one, 2,5-dimethyl-4-methoxy-3(2H)-furanone, D-erythro-hex-2-enonic acid γ-lactone, 3,4-dimethyl-1,2-cyclopentanedione, 3,4-dihydro-2H-1-benzopyran-2-one, and 3-propylidene-1(3H)-isobenzofuran.
[23] The production method of any one of [19] to [22], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, and maltol.
[24] The production method of any one of [19] to [23], wherein the substance capable of producing cyclotene or a cyclotene analogous compound by heating comprises at least one saccharide selected from the group consisting of ribose, xylose, arabinose, glucose, fructose, sucrose, maltose, and lactose.
[25] The production method of [24], wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.
[26] The production method of any one of [19] to [25], further comprising adding a heated substance of β-caryophyllene or a heated substance of a β-caryophyllene analogous compound.
[27] The production method of any one of [19] to [26], wherein the food is a food with an enhanced mouth-coating feel.
[28] The production method of any one of [19] to [27], wherein the food is a food comprising an oil or fat.
[29] A food comprising an in-oil-heated substance of cyclotene, an in-oil-heated substance of a cyclotene analogous compound, or an in-oil-heated substance of a substance capable of producing cyclotene or a cyclotene analogous compound by heating.
[30] The food of [29], wherein the cyclotene analogous compound is a compound (excluding cyclotene) represented by the formula (I) : 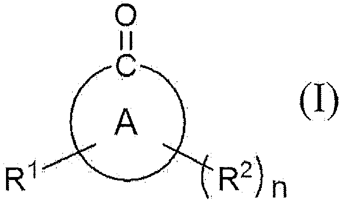 wherein
   ring A is a 5-membered or 6-membered, saturated or unsaturated, carbocycle or oxygen-containing or nitrogen-containing heterocycle;
   R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
   R² is a hydrocarbon group having 1 - 8 carbon atoms, a hydroxy group, or a hydrogen atom; and
   n is an integer of 1 to 3.
[31] The food of any one of [29] to [31], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadiene-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.
[32] The food of any one of [29] to [31], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, dihydro-5-octyl-2(3H)-furanone, 6-heptyltetrahydro-2H-pyran-2-one, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, (1R,4R)-1,7,7-trimethyl-bicyclo[2.2.1]heptan-2-one, (5R)-2-methyl-5-(1-methylethenyl)-2-cyclohexen-1-one, 2,5-dimethyl-4-methoxy-3(2H)-furanone, D-erythro-hex-2-enonic acid γ-lactone, 3,4-dimethyl-1,2-cyclopentanedione, 3,4-dihydro-2H-1-benzopyran-2-one, and 3-propylidene-1(3H)-isobenzofuranone.
[33] The food of any one of [29] to [32], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, and maltol.
[34] The food of any one of [29] to [33], wherein the substance capable of producing cyclotene or a cyclotene analogous compound by heating comprises at least one saccharide selected from the group consisting of ribose, xylose, arabinose, glucose, fructose, sucrose, maltose, and lactose.
[35] The food of [34], wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.
[36] The food of any one of [29] to [35], further comprising a heated substance of β-caryophyllene or a heated substance of a β-caryophyllene analogous compound.
[37] The food of any one of [29] to [36], wherein the food is a food with an enhanced mouth-coating feel.
[38] The food of any one of [29] to [37], wherein the food is a food comprising oil or fat.
[39] A method for producing a mouth-coating feel enhancer, comprising heating at least one selected from the group consisting of cyclotene, a cyclotene analogous compound, and a substance capable of producing cyclotene or a cyclotene analogous compound by heating in an oil- or fat-containing composition.
[40] The production method of [39], wherein the cyclotene analogous compound is a compound (excluding cyclotene) represented by the formula (I): 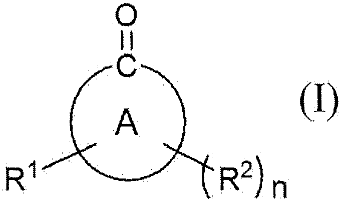 wherein
   ring A is a 5-membered or 6-membered, saturated or unsaturated, carbocycle or oxygen-containing or nitrogen-containing heterocycle;
   R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
   R² is a hydrocarbon group having 1 - 8 carbon atoms, a hydroxy group, or a hydrogen atom; and
   n is an integer of 1 to 3.
[41] The production method of [39] or [40], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadiene-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.
[42] The production method of any one of [39] to [41], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, dihydro-5-octyl-2(3H)-furanone, 6-heptyltetrahydro-2H-pyran-2-one, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, (1R,4R)-1,7,7-trimethyl-bicyclo[2.2.1]heptan-2-one, (5R)-2-methyl-5-(1-methylethenyl)-2-cyclohexen-1-one, 2,5-dimethyl-4-methoxy-3(2H)-furanone, D-erythro-hex-2-enonic acid γ-lactone, 3,4-dimethyl-1,2-cyclopentanedione, 3,4-dihydro-2H-1-benzopyran-2-one, and 3-propylidene-1(3H)-isobenzofuran.
[43] The production method of any one of [39] to [42], wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, and maltol.
[44] The production method of any one of [39] to [43], wherein the substance capable of producing cyclotene or a cyclotene analogous compound by heating comprises at least one saccharide selected from the group consisting of ribose, xylose, arabinose, glucose, fructose, sucrose, maltose, and lactose.
[45] The production method of [44], wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.
[46] The production method of any one of [39] to [45], wherein a heating temperature of at least one selected from the group consisting of cyclotene, a cyclotene analogous compound, and a substance capable of producing cyclotene or a cyclotene analogous compound by heating is 40 to 200°C, and a heating time thereof is 0.1 to 3840 min.
[47] The production method of any one of [36] to [46], further comprising heating at least one compound selected from the group consisting of β-caryophyllene and a β-caryophyllene analogous compound.
[48] The production method of any one of [39] to [47], wherein the mouth-coating feel enhancer is for a food containing oil or fat.

### [Advantageous Effects of Invention]

According to the present invention, a mouth-coating feel enhancer capable of effectively enhancing a mouth-coating feel and a production method thereof can be provided. According to the present invention, moreover, a mouth-coating feel enhancer capable of effectively enhancing a mouth-coating feel without imparting an off-flavor and a production method thereof can be provided.

According to the present invention, a food with an effectively enhanced mouth-coating feel and a production method thereof can be provided. According to the present invention, moreover, a food with an effectively enhanced mouth-coating feel and without an off-flavor, and a production method thereof can be provided.

According to the present invention, a method for effectively enhancing a mouth-coating feel can be provided. According to the present invention, moreover, a method for effectively enhancing a mouth-coating feel without imparting an off-flavor can be provided.

### [Description of Embodiments]

### <Mouth-coating feel enhancer and production method thereof>

One of the features of the mouth-coating feel enhancer of the present invention (at times referred to as "the enhancer of the present invention" in the present specification) is that it contains an in-oil-heated substance of cyclotene, an in-oil-heated substance of a cyclotene analogous compound, or an in-oil-heated substance of a substance capable of producing cyclotene or a cyclotene analogous compound by heating (in other words, an in-oil-heated substance of cyclotene, an in-oil-heated substance of a cyclotene analogous compound, or an in-oil-heated substance of a substance capable of producing cyclotene or a cyclotene analogous compound by heating) as an active ingredient.

In the present specification, "cyclotene, cyclotene analogous compound, and substance capable of producing cyclotene or cyclotene analogous compound by heating" are at times collectively referred to as "cyclotene or the like" for convenience.

In the present invention, an "in-oil-heated substance" of cyclotene or the like refers to a substance obtained by dissolving or dispersing cyclotene or the like in an oil- or fat-containing composition, and heating the obtained solution or dispersion. In the present invention, the "oil or fat" refers to a substance containing acylglycerol (triglyceride, diglyceride, monoglyceride, etc.) as a main component. Generally, the substance having fluidity at ordinary temperature is sometimes referred to as "oil" and the substance having no fluidity is sometimes referred to as "fat". The "oil or fat" is a concept including the both.

The cyclotene (generally also referred to as methyl cyclopentenolone, 2-hydroxy-3-methyl-2-cyclopentenone, etc.) used in the present invention is a compound represented by the following formula (CAS Registry Number: 80-71-7).

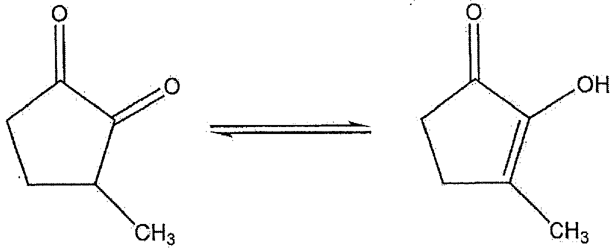

The production method of cyclotene used in the present invention is not particularly limited, and those produced by a method known per se (e.g., chemical synthesis method, enzyme method, fermentation method, extraction method, etc.) or a method analogous thereto may be used. A commercially available product may also be used as cyclotene.

In one embodiment, cyclotene used in the present invention may be a chemically synthesized product produced by a chemical synthesis method, or an isolated product extracted and purified from a material containing cyclotene. Examples of the material containing cyclotene include natural products such as agricultural, livestock and fishery products (e.g., maple, walnut, etc.); fermentation products such as culture solution obtained by culturing microorganisms, bacterial cells, or the like; and processed products thereof (e.g., sugarcane processed product, raw sugar, Wasanbon sugar, brown sugar, molasses, coffee bean, smoking agent, caramel sauce, wine, etc.).

In the present invention, a material containing cyclotene may be used as it is or after purification to a desired degree, instead of the chemically synthesized product or isolated product of cyclotene, or in addition to the chemically synthesized product or isolated product thereof. The content of cyclotene in the material may be measured by gas chromatography-mass spectrometry (GC-MS) or the like.

In the present invention, the "cyclotene analogous compound" refers to a compound having a structure and properties similar to those of cyclotene. For example, a compound (excluding cyclotene) represented by the following formula (I): 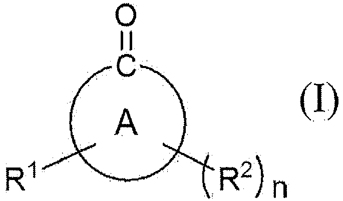 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3, which has a cyclic structure with at least one oxo group (=O) on the ring (carbocycle, heterocycle), and the like can be mentioned.

In the present specification, a compound represented by the formula (I) is sometimes referred to as "compound (I)".

Each group of the formula (I) is explained below.

In the present specification, the "hydrocarbon group" may be saturated or unsaturated and may be, for example, an alkyl group, an alkenyl group, an alkynyl group, an alkylidene group, or the like.

In the present specification, the "alkyl group having 1 - 8 carbon atoms" may be linear or optionally has a branch. Specific examples of the alkyl group having 1 - 8 carbon atoms include methyl group, ethyl group, propyl group, isopropyl group, butyl group, sec-butyl group, isobutyl group, tert-butyl group, pentyl group, neopentyl group, isopentyl group, 1-ethylpropyl group, hexyl group, isohexyl group, 1,1-dimethylbutyl group, 2,2-dimethylbutyl group, 3,3-dimethylbutyl group, 2-ethylbutyl group, heptyl group, octyl group, and the like.

In the present specification, the "alkenyl group having 2 - 8 carbon atoms" may be linear or optionally has a branch. Specific examples of the alkenyl group having 2 - 8 carbon atoms include ethenyl group, 1-propenyl group, 2-propenyl group, 1-methylethenyl group, 1-butenyl group, 2-butenyl group, 3-butenyl group, 2-methyl-1-propenyl group, 1-pentenyl group, 2-pentenyl group, 3-pentenyl group, 4-pentenyl group, 3-methyl-2-butenyl group, 1-hexenyl group, 3-hexenyl group, 5-hexenyl group, 4-methyl-3-pentenyl group, 1-heptenyl group, 1-octenyl group, and the like.

In the present specification, the "alkynyl group having 2 - 8 carbon atoms" may be linear or optionally has a branch. Specific examples of the alkynyl group having 2 - 8 carbon atoms include ethynyl group, 1-propynyl group, 2-propynyl group, 1-butynyl group, 2-butynyl group, 3-butynyl group, 1-pentynyl group, 2-pentynyl group, 3-pentynyl group, 4-pentynyl group, 1-hexynyl group, 2-hexynyl group, 3-hexynyl group, 4-hexynyl group, 5-hexynyl group, 1-heptynyl group, 1-octynyl group, and the like.

In the present specification, the "alkylidene group having 1 - 8 carbon atoms" may be linear or optionally has a branch. Specific examples of the alkylidene group having 1 - 8 carbon atoms include methylidene group, ethylidene group, propylidene group, isopropylidene group, butylidene group, pentylidene group, hexylidene group, heptylidene group, octylidene group, and the like.

In the present specification, "optionally having substituent(s)" means unsubstituted or having one or more substituents at substitutable position(s). When two or more substituents are present, the respective substituents may be the same or different.

In the present specification, examples of the "substituent" of the "optionally having substituent(s)" include halogen atom, hydroxy group, nitro group, cyano group, alkyl group, alkoxy group, alkoxycarbonyl group, acyl group, acyloxy group, amino group, oxo group, and the like. The substituent is optionally further substituted by the above-mentioned substituent(s).

In the present specification, the "alkoxy group having 1 - 4 carbon atoms" may be linear or optionally has a branch. Specific examples of the alkoxy group having 1 - 4 carbon atoms include methoxy group, ethoxy group, propoxy group, isopropoxy group, butoxy group, sec-butoxy group, tert-butoxy group, isobutoxy group, and the like.

In the present specification, specific examples of the "acyloxy group having 1 - 4 carbon atoms" include formyloxy group, acetoxy group, propionyloxy group, and the like.

The ring A in the formula (I) is a saturated or unsaturated, carbocycle or oxygen-containing or nitrogen-containing heterocycle, preferably a saturated or unsaturated, carbocycle or oxygen-containing heterocycle. The member of ring A is 5 or 6, preferably 5. When the ring A is an oxygen-containing or nitrogen-containing heterocycle, the number of hetero atoms in the heterocycle is 1 or 2, preferably 1.

One embodiment of ring A is a 5-membered, saturated or unsaturated, carbocycle, or oxygen-containing or nitrogen-containing heterocycle.

Another embodiment of ring A is a 5-membered or 6-membered, saturated or unsaturated, carbocycle, or oxygen-containing heterocycle (preferably, carbocycle or oxygen-containing heterocycle having one hetero atom).

A still another embodiment of ring A is a 5-membered, saturated or unsaturated, carbocycle, or oxygen-containing heterocycle (preferably, carbocycle or oxygen-containing heterocycle having one hetero atom).

Specific examples of ring A include carbocycles such as cyclopentane ring, cyclopentene ring, cyclopentadiene ring, cyclohexane ring, cyclohexene ring, 1,3-cyclohexadiene ring, 1,4-cyclohexadiene ring, benzene ring, or the like; oxygen-containing heterocycles such as tetrahydrofuran ring, 2,3-dihydrofuran ring, 2,5-dihydrofuran ring, furan ring, tetrahydropyran ring, 2H-pyran ring, 4H-pyran ring, or the like; nitrogen-containing heterocycles such as pyrrolidine ring, piperidine ring, or the like; and the like.

As shown in the formula (I), ring A is substituted by at least one oxo group.

R¹ and R² in the formula (I) are each a substituent bonded to a substitutable position of ring A. R¹ and R² may be each bonded to a different atom (carbon atom, hetero atom), or may be bonded to the same carbon atom if substitutable.

R¹ in the formula (I) is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom.

Specific examples of the "alkoxy group having 1 - 4 carbon atoms" for R¹ include methoxy group, ethoxy group, propoxy group, isopropoxy group, butoxy group, sec-butoxy group, tert-butoxy group, isobutoxy group, and the like, preferably methoxy group. The number of carbon atoms in the alkoxy group is preferably 1 to 3, more preferably 1 or 2.

Specific examples of the "acyloxy group having 1 - 4 carbon atoms" for R¹ include formyloxy group, acetoxy group, propionyloxy group, and the like, preferably formyloxy group and acetoxy group. The number of carbon atoms in the acyloxy group is preferably 1 to 3, more preferably 1 or 2.

Examples of the "hydrocarbon group having 1 - 8 carbon atoms" of the "hydrocarbon group having 1 - 8 carbon atoms and optionally having substituent(s)" for R¹ include alkyl group having 1 - 8 carbon atoms, alkenyl group having 2 - 8 carbon atoms, alkynyl group having 2 - 8 carbon atoms, alkylidene group having 1 - 8 carbon atoms, and the like, preferably, alkyl group having 1 - 8 carbon atoms and alkenyl group having 2 - 8 carbon atoms.

Specific examples of the "alkyl group having 1 - 8 carbon atoms" for R¹ include methyl group, ethyl group, propyl group, isopropyl group, butyl group, sec-butyl group, isobutyl group, tert-butyl group, pentyl group, neopentyl group, isopentyl group, 1-ethylpropyl group, hexyl group, isohexyl group, 1,1-dimethylbutyl group, 2,2-dimethylbutyl group, 3,3-dimethylbutyl group, 2-ethylbutyl group, heptyl group, octyl group, and the like, preferably methyl group, ethyl group, propyl group, isopropyl group, butyl group, sec-butyl group, isobutyl group, and tert-butyl group, more preferably methyl group, ethyl group, propyl group, and isopropyl group, particularly preferably methyl group and ethyl group. The number of carbon atoms in the alkyl group is preferably 1 to 6, more preferably 1 to 5, further preferably 1 to 4, particularly preferably 1 to 3.

Specific examples of the "alkenyl group having 2 - 8 carbon atoms" for R¹ include ethenyl group, 1-propenyl group, 2-propenyl group, 1-methylethenyl group, 1-butenyl group, 2-butenyl group, 3-butenyl group, 2-methyl-1-propenyl group, 1-pentenyl group, 2-pentenyl group, 3-pentenyl group, 4-pentenyl group, 3-methyl-2-butenyl group, 1-hexenyl group, 3-hexenyl group, 5-hexenyl group, 4-methyl-3-pentenyl group, 1-heptenyl group, 1-octenyl group, and the like, preferably ethenyl group and 1-methylethenyl group. The number of carbon atoms in the alkyl group is preferably 2 to 6, more preferably 2 to 5, further preferably 2 to 4, particularly preferably 2 or 3.

Specific examples of the "alkynyl group having 2 - 8 carbon atoms" for R¹ include ethynyl group, 1-propynyl group, 2-propynyl group, 1-butynyl group, 2-butynyl group, 3-butynyl group, 1-pentynyl group, 2-pentynyl group, 3-pentynyl group, 4-pentynyl group, 1-hexynyl group, 2-hexynyl group, 3-hexynyl group, 4-hexynyl group, 5-hexynyl group, 1-heptynyl group, 1-octynyl group, and the like, preferably ethynyl group, 1-propynyl group, and 2-propynyl group. The number of carbon atoms in the alkynyl group is preferably 2 to 6, more preferably 2 to 5, further preferably 2 to 4, particularly preferably 2 or 3.

Specific examples of the "alkylidene group having 1 - 8 carbon atoms" for R¹ include methylidene group, ethylidene group, propylidene group, isopropylidene group, butylidene group, pentylidene group, hexylidene group, heptylidene group, octylidene group, and the like, preferably methylidene group, ethylidene group, propylidene group, and isopropylidene group. The number of carbon atoms in the alkylidene group is preferably 1 to 6, more preferably 1 to 5, further preferably 1 to 4, particularly preferably 1 to 3.

Examples of the "substituent" of the "hydrocarbon group having 1 - 8 carbon atoms and optionally having substituent(s)" for R¹ include halogen atom, hydroxy group, nitro group, cyano group, alkyl group, alkoxy group, alkoxycarbonyl group, acyl group, acyloxy group, amino group, oxo group, and the like. Among these, a substituent containing an oxygen atom (e.g., hydroxy group, alkoxycarbonyl group, oxo group, etc.) is preferred. When the "hydrocarbon group having 1 - 8 carbon atoms" for R¹ has a substituent, the number of substituents is not particularly limited as long as it is a substitutable number. It is preferably 1 to 3, more preferably 1 or 2. When the "hydrocarbon group having 1 - 8 carbon atoms" for R¹ has two or more substituents, the respective substituents may be the same or different.

When R¹ in the formula (I) is a hydrocarbon group having 1 - 8 carbon atoms and optionally having substituent(s), the carbon atom in the hydrocarbon group may be bonded to a carbon atom of ring A to form a crosslinked structure or a saturated or unsaturated ring structure.

R¹ is preferably an oxo group, a hydroxy group, an alkoxy group having 1 - 4 carbon atoms (e.g., methoxy group, etc.), an acyloxy group having 1 - 4 carbon atoms (e.g., acetoxy group, etc.), a hydrocarbon group having 1 - 8 carbon atoms (e.g., alkyl group, alkenyl group, etc.) and optionally having substituent(s), or a hydrogen atom, more preferably, an oxo group, a hydroxy group, a methoxy group, an acetoxy group, an alkyl group having 1 - 8 carbon atoms (e.g., methyl group, ethyl group, heptyl group, octyl group, etc.) and optionally having substituent(s), an alkenyl group having 2 - 8 carbon atoms (e.g., 1-methylethenyl group, etc.) and optionally having substituent(s), or a hydrogen atom, particularly preferably, an oxo group, a hydroxy group, a methoxy group, an acetoxy group, a methyl group optionally having substituent(s) (e.g., hydroxy group, alkoxycarbonyl group, etc.), an ethyl group optionally having substituent(s) (e.g., hydroxy group, alkoxycarbonyl group, etc.), an isopropenyl group, a heptyl group, an octyl group, or a hydrogen atom.

R² in the formula (I) is a hydrocarbon group having 1 - 8 carbon atoms, a hydroxy group, or a hydrogen atom.

R² is preferably an alkyl group having 1 - 8 carbon atoms, an alkylidene group having 1 - 8 carbon atoms, a hydroxy group, or a hydrogen atom, more preferably, an alkyl group having 1 - 8 carbon atoms (e.g., methyl group, ethyl group, pentyl group, etc.), an alkylidene group having 1 - 8 carbon atoms (e.g., propylidene group, etc.), a hydroxy group, or a hydrogen atom, particularly preferably, a methyl group, a pentyl group, a propylidene group, a hydroxy group, or a hydrogen atom.

In the formula (I), n is an integer of 1 to 3. The n is preferably 1 or 2, more preferably 1.

In one embodiment, when n in the formula (I) is 2 or 3, R² in plurality may be the same or different.

Preferred compounds (I) are shown below.

### [Compound (I-A)]

Compound (I) wherein
ring A is a 5-membered or 6-membered, saturated or unsaturated carbocycle;
when R¹ is an oxo group, a hydroxy group, an alkoxy group having 1 - 4 carbon atoms, an acyloxy group having 1 - 4 carbon atoms, an alkyl group having 1 - 8 (preferably, 1 - 6) carbon atoms and optionally having substituent(s), alkenyl group having 2 - 8 (preferably, 2 - 6) carbon atoms and optionally having substituent(s), or a hydrogen atom, and when R¹ is an alkyl group having 1 - 8 (preferably, 1 - 6) carbon atoms and optionally having substituent(s), or an alkenyl group having 2 - 8 (preferably, 2 - 6) carbon atoms and optionally having substituent(s), the carbon atom in the alkyl group or alkenyl group may be bonded to a carbon atom of ring A to form a crosslinked structure or a saturated or unsaturated ring structure;
R² is an alkyl group having 1 - 8 (preferably, 1 - 6) carbon atoms, an alkylidene group having 1 - 8 (preferably, 1 - 6) carbon atoms, a hydroxy group, or a hydrogen atom; and
n is an integer of 1 to 3 (preferably, 1, 2).

### [Compound (I-B)]

Compound (I) wherein
ring A is a 5-membered or 6-membered, saturated or unsaturated oxygen-containing heterocycle;
when R¹ is an oxo group, a hydroxy group, an alkoxy group having 1 - 4 carbon atoms, an acyloxy group having 1 - 4 carbon atoms, an alkyl group having 1 - 8 (preferably, 1 - 6) carbon atoms and optionally having substituent(s), alkenyl group having 2 - 8 (preferably, 2 - 6) carbon atoms and optionally having substituent(s), or a hydrogen atom, and when R¹ is an alkyl group having 1 - 8 (preferably, 1 - 6) carbon atoms and optionally having substituent(s), or an alkenyl group having 2 - 8 (preferably, 2 - 6) carbon atoms and optionally having substituent(s), the carbon atom in the alkyl group or alkenyl group may be bonded to a carbon atom of ring A to form a crosslinked structure or a saturated or unsaturated ring structure;
R² is an alkyl group having 1 - 8 (preferably, 1 - 6) carbon atoms, an alkylidene group having 1 - 8 (preferably, 1 - 6) carbon atoms, a hydroxy group, or a hydrogen atom; and
n is an integer of 1 to 3 (preferably, 1, 2).

### [Compound (I-C)]

Compound (I) wherein
ring A is a 5-membered or 6-membered, saturated or unsaturated nitrogen-containing heterocycle;
when R¹ is an oxo group, a hydroxy group, an alkoxy group having 1 - 4 carbon atoms, an acyloxy group having 1 - 4 carbon atoms, an alkyl group having 1 - 8 (preferably, 1 - 6) carbon atoms and optionally having substituent(s), alkenyl group having 2 - 8 (preferably, 2 - 6) carbon atoms and optionally having substituent(s), or a hydrogen atom, and when R¹ is an alkyl group having 1 - 8 (preferably, 1 - 6) carbon atoms and optionally having substituent(s), or an alkenyl group having 2 - 8 (preferably, 2 - 6) carbon atoms and optionally having substituent(s), the carbon atom in the alkyl group or alkenyl group may be bonded to a carbon atom of ring A to form a crosslinked structure or a saturated or unsaturated ring structure;
R² is an alkyl group having 1 - 8 (preferably, 1 - 6) carbon atoms, an alkylidene group having 1 - 8 (preferably, 1 - 6) carbon atoms, a hydroxy group, or a hydrogen atom; and
n is an integer of 1 to 3 (preferably, 1, 2).

In one embodiment, compound (I) may be a compound (excluding cyclotene) represented by the following formula (Ia) : 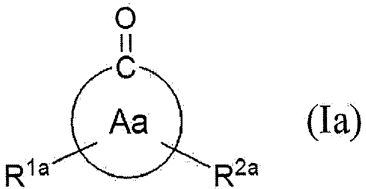 wherein
ring Aa is a 5-membered or 6-membered, saturated or unsaturated, carbocycle or oxygen-containing or nitrogen-containing heterocycle;
R^{1a} is an oxo group, a hydroxy group, or a hydrogen atom; and
R^{2a} is an alkyl group having 1 - 8 carbon atoms, or a hydrogen atom.

In the present specification, the compound represented by the formula (Ia) is at times referred to as "compound (Ia)".

Each group of the formula (Ia) is explained below.

The ring Aa in the formula (Ia) is similar to ring A in the formula (I), and preferred embodiments and specific examples are also the same.

As shown in the formula (Ia), ring Aa is substituted by at least one oxo group.

In the formula (Ia), the moiety represented by 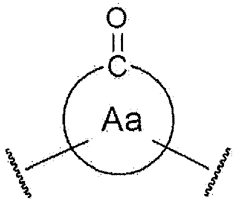 is preferably selected from the following:

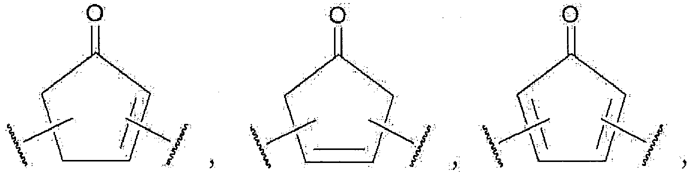

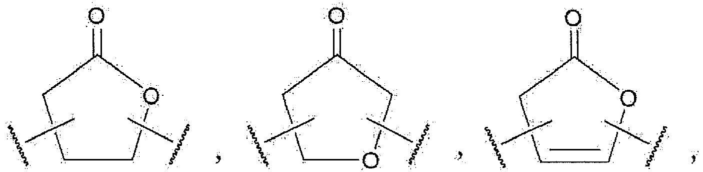

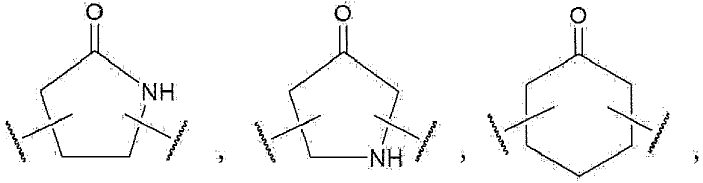

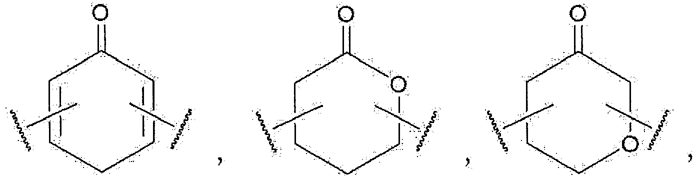

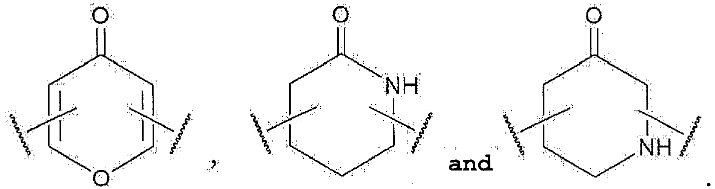

Particularly, the aforementioned moiety in the formula (Ia) is more preferably selected from: 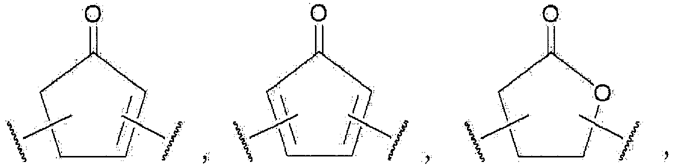 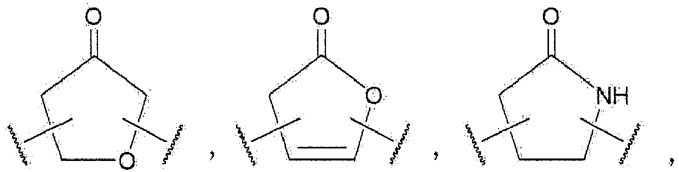 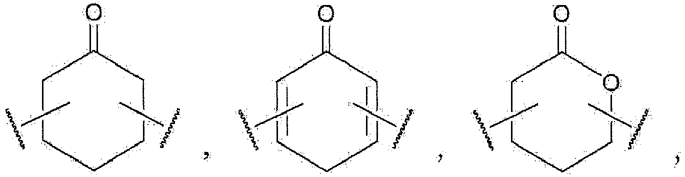 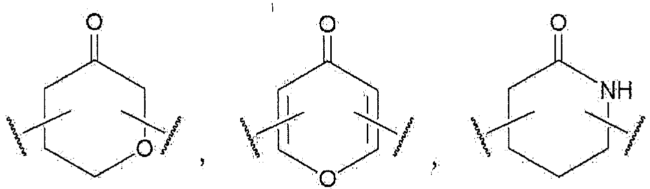 and

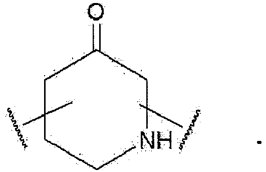

The aforementioned moiety in the formula (Ia) is particularly preferably selected from the following:

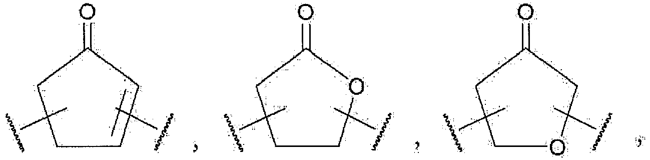

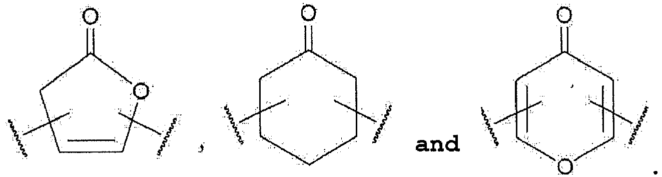

R^{1a} and R^{2a} in the formula (Ia) are each a substituent bonded to a substitutable position of ring Aa. R^{1a} and R^{2a} may be each bonded to a different atom (carbon atom, hetero atom), or bonded to the same carbon atom if substitutable.

R^{1a} in the formula (Ia) is an oxo group, a hydroxy group, or a hydrogen atom. R^{1a} is preferably a hydroxy group or a hydrogen atom.

R^{2a} in the formula (Ia) is an alkyl group having 1 - 8 carbon atoms, or a hydrogen atom.

Specific examples of the "alkyl group having 1 - 8 carbon atoms" for R^{2a} include methyl group, ethyl group, propyl group, isopropyl group, butyl group, sec-butyl group, isobutyl group, tert-butyl group, pentyl group, neopentyl group, isopentyl group, 1-ethylpropyl group, hexyl group, isohexyl group, 1,1-dimethylbutyl group, 2,2-dimethylbutyl group, 3,3-dimethylbutyl group, 2-ethylbutyl group, heptyl group, octyl group, and the like, preferably, methyl group, ethyl group, propyl group, isopropyl group, butyl group, sec-butyl group, isobutyl group, and tert-butyl group, more preferably, methyl group, ethyl group, propyl group, and isopropyl group, particularly preferably, methyl group and ethyl group. The number of carbon atoms in the alkyl group is preferably 1 to 6, more preferably 1 to 5, further preferably 1 to 4, particularly preferably 1 to 3.

R^{2a} is preferably an alkyl group having 1 - 6 carbon atoms or a hydrogen atom, more preferably, an alkyl group having 1 - 4 carbon atoms, or a hydrogen atom, further preferably, a methyl group, an ethyl group, a propyl group, an isopropyl group, or a hydrogen atom, particularly preferably, a methyl group, an ethyl group, or a hydrogen atom.

Preferred compounds (Ia) are shown below.

### [Compound (Ia-A)]

Compound (Ia) wherein
ring A is a 5-membered or 6-membered, saturated or unsaturated carbocycle;
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-B)]

Compound (Ia) wherein
ring A is a 5-membered or 6-membered, saturated or unsaturated oxygen-containing heterocycle;
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-C)]

Compound (Ia) wherein
ring A is a 5-membered or 6-membered, saturated or unsaturated nitrogen-containing heterocycle;
R^{1a} is a hydrogen atom; and
R^{2a} is an alkyl group having 1 - 6 (preferably, 1 - 4) carbon atoms, or a hydrogen atom.

### [Compound (Ia-D)]

Compound (Ia) wherein, in the formula (Ia),
a moiety represented by 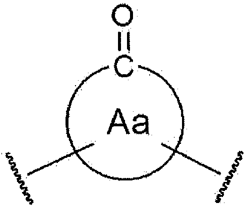 is selected from the following: 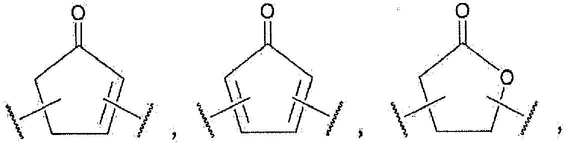 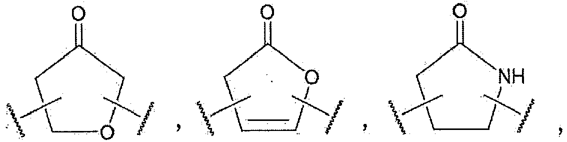 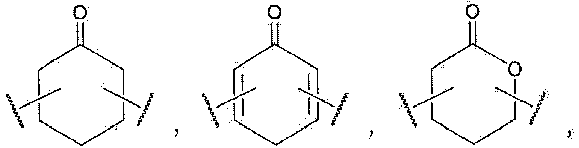 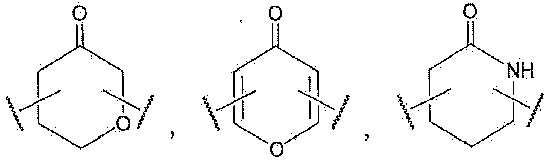 and

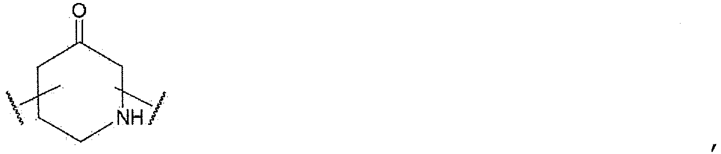

R^{1a} is an oxo group, a hydroxy group or a hydrogen atom; and
R^{2a} is an alkyl group having 1 - 6 (preferably, 1 - 4) carbon atoms, or a hydrogen atom.

### [Compound (Ia-E)]

Compound (Ia) wherein, in the formula (Ia),
a moiety represented by 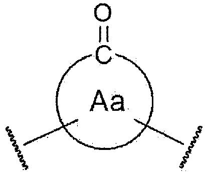 is selected from the following:

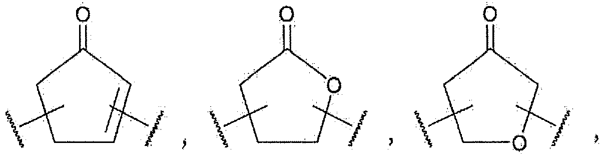

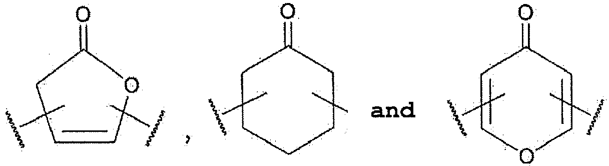

R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-F)]

Compound (Ia) represented by a formula selected from the following; 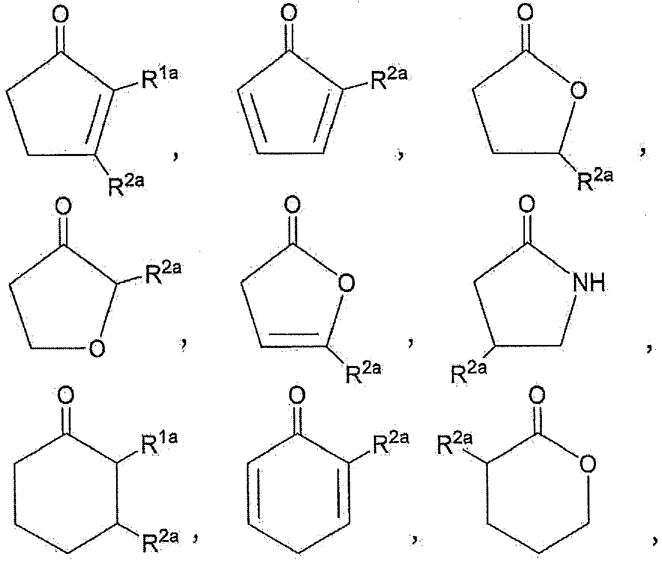 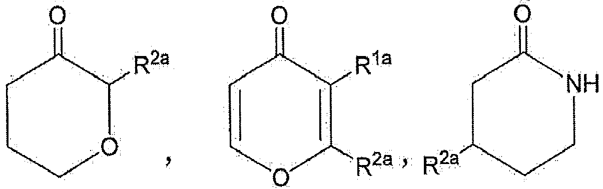 and 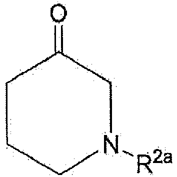 in each formula,
R^{1a} is an oxo group, a hydroxy group, or a hydrogen atom (preferably, a hydroxy group or a hydrogen atom); and
R^{2a} is an alkyl group having 1 - 6 (preferably, 1 - 4) carbon atoms, or a hydrogen atom.

### [Compound (Ia-G)]

Compound (Ia) represented by a formula selected from the following; 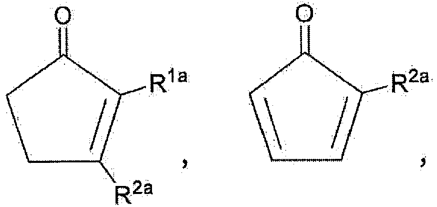 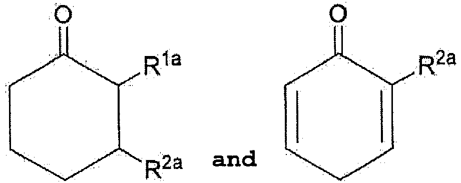 in each formula,
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-H)]

Compound (Ia) represented by a formula selected from the following; 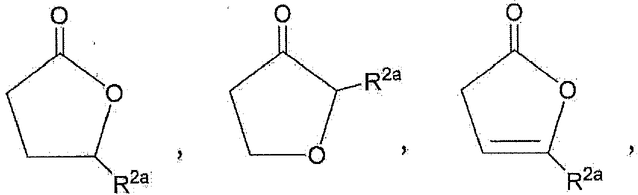 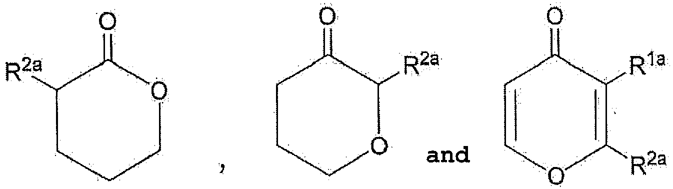 in each formula,
R^{1a} is an oxo group, a hydroxy group, or a hydrogen atom; and
R^{2a} is an alkyl group having 1 - 6 (preferably, 1 - 4) carbon atoms, or a hydrogen atom.

### [Compound (Ia-I)]

Compound (Ia) represented by a formula selected from the following; 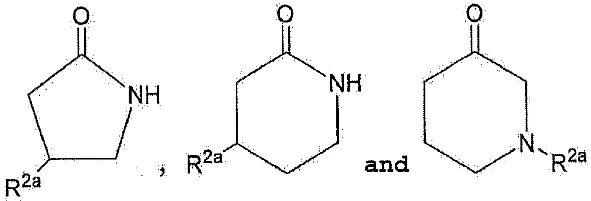 in each formula,
R^{2a} is an alkyl group having 1 - 6 (preferably, 1 - 4) carbon atoms, or a hydrogen atom.

### [Compound (Ia-J)]

Compound (Ia) represented by a formula selected from the following; 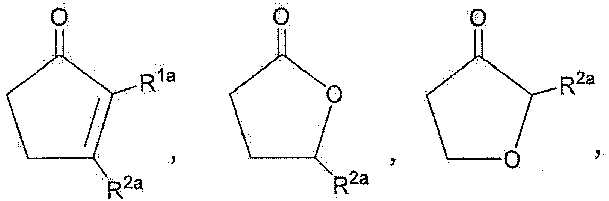 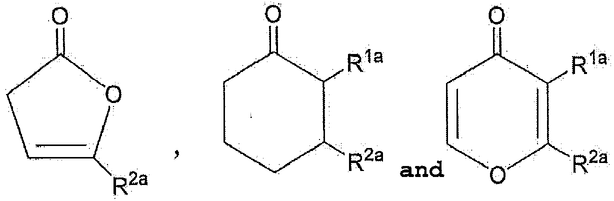 in each formula,
R^{1a} is an oxo group, a hydroxy group, or a hydrogen atom (preferably, a hydroxy group or a hydrogen atom); and
R^{2a} is an alkyl group having 1 - 6 (preferably, 1 - 4) carbon atoms, or a hydrogen atom.

Specific examples of preferred compound (I) include
·3-methyl-2-cyclopentenone (CAS Registry Number: 2758-18-1): 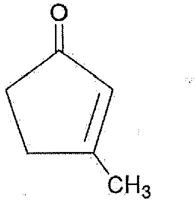
·γ-butyrolactone (CAS Registry Number: 96-48-0): 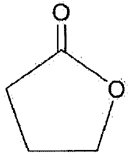
·2-methyltetrahydrofuran-3-one (CAS Registry Number: 3188-00-9) : 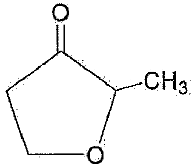
·α-angelicalactone (CAS Registry Number: 591-12-8): 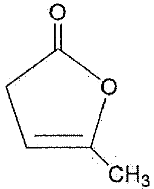
·ethyl cyclopentenolone (CAS Registry Number: 21835-01-8): 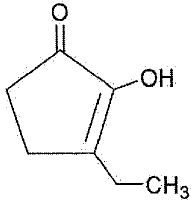
·3-methyl-1,2-cyclohexanedione (CAS Registry Number: 3008-43-3) : 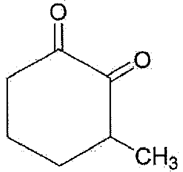
·maltol (CAS Registry Number: 118-71-8): 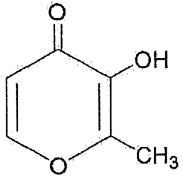
·tetrahydropyran-3-one (CAS Registry Number: 23462-75-1): 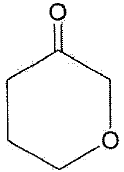
·2,5-cyclohexadien-1-one (CAS Registry Number: 5664-33-5): 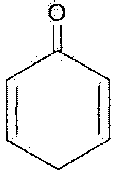
·4-methylpyrrolidin-2-one (CAS Registry Number: 2996-58-9, when tertiary carbon is S form; 31551-66-3, when tertiary carbon is R form; 260061-31-2): 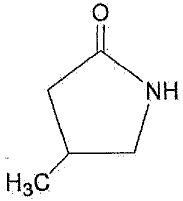
·2-methyl-2,4-cyclopentadiene-1-one (CAS Registry Number: 94618-71-0) : 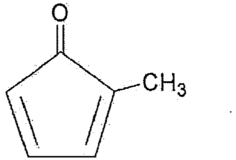
·4-ethylpiperidin-2-one (CAS Registry Number: 50549-26-3): 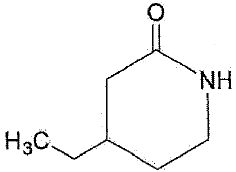
·1-methylpiperidin-3-one (CAS Registry Number: 5519-50-6): 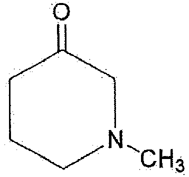
·tetrahydro-3-methylpyran-2-one (CAS Registry Number: 10603-03-9) : 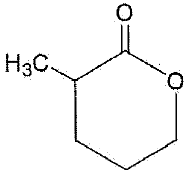
·dihydro-5-octyl-2(3H)-furanone (CAS Registry Number: 2305-05-7) : 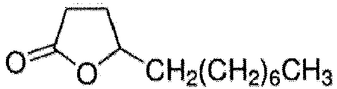
·6-heptyltetrahydro-2H-pyran-2-one (CAS Registry Number: 713-95-1) : 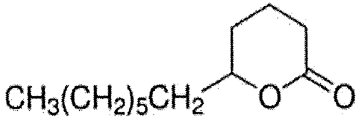
·2,5-dimethyl-4-methoxy-3(2H)-furanone (CAS Registry Number: 4077-47-8) : 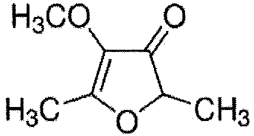
·D-erythro-hex-2-enonic acid γ-lactone (CAS Registry Number: 89-65-6) : 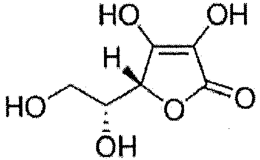
·4-(acetoxy)-2,5-dimethyl-3(2H)-furanone (CAS Registry Number: 4166-20-5) : 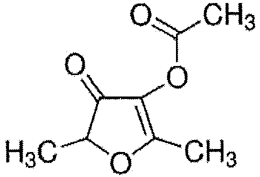
·methyl 3-oxo-2-pentyl-1-cyclopentaneacetate (CAS Registry Number: 24851-98-7): 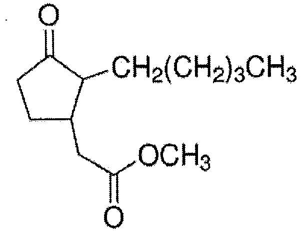
·4,5-dimethyl-3-hydroxy-2(5H)-furanone (CAS Registry Number: 28664-35-9) : 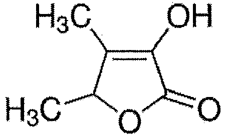
·3,4-dimethyl-1,2-cyclopentanedione (CAS Registry Number: 13494-06-9) : 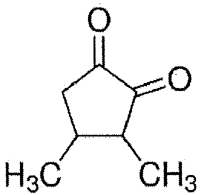
·(1R,4R)-1,7,7-trimethyl-bicyclo[2.2.1]heptan-2-one (CAS Registry Number: 464-49-3): 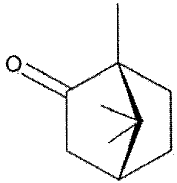
·3,4-dihydro-2H-1-benzopyran-2-one (CAS Registry Number: 119-84-6) : 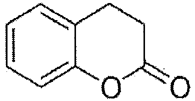
·(5R)-2-methyl-5-(1-methylethenyl)-2-cyclohexen-1-one (CAS Registry Number: 6485-40-1): 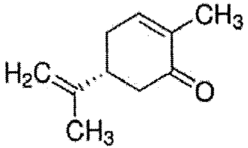
·3-propylidene-1(3H)-isobenzofuranone (CAS Registry Number: 17369-59-4): 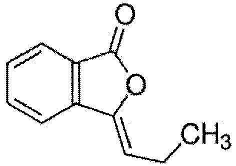
·3,5,5-trimethyl-2-cyclohexen-1-one (CAS Registry Number: 78-59-1) : 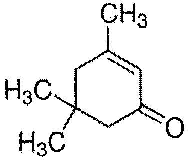
and the like. Among these, 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, dihydro-5-octyl-2(3H)-furanone, 6-heptyltetrahydro-2H-pyran-2-one, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, (1R,4R)-1,7,7-trimethyl-bicyclo[2.2.1]heptan-2-one, (5R)-2-methyl-5-(1-methylethenyl)-2-cyclohexen-1-one, 2,5-dimethyl-4-methoxy-3(2H)-furanone, D-erythro-hex-2-enonic acid γ-lactone, 3,4-dimethyl-1,2-cyclopentanedione, 3,4-dihydro-2H-1-benzopyran-2-one, and 3-propylidene-1(3H)-isobenzofuranone are preferred because an in-oil-heated substance capable of particularly effectively improving the mouth-coating feel can be obtained.

The production method of a cyclotene analogous compound is not particularly limited, and it can be produced by a method known per se or a method analogous thereto. For example, a cyclotene analogous compound can be obtained by a method such as extraction from plants such as coffee bean or the like (MA. Gianturco, AS. Giammarino, R.G. Pitcher, Tetrahedron 19 2051 (1963)), treatment of lumber at a high temperature (J. Meyerfeld, Chem. Ztg. 36 549 (1912)) or heat-alkaline treatment (T. Enkvist, B. Alfredsson, M. Merikallio, P. Paakonen, O. Jarrela, Acta. Chem. Scand. 8 51 (1954)), heat treatment of saccharides (WO 2014/157381; K. Heyns, R. Stute & H. Paulsen, Carbohydrate Res., 2, 132 (1966); R. R. Johnson, E. D. Alford & G. W. Kinzer, J. Agr. Food Chem., 17, 22 (1969); Yasuo Shimizu, Shigeki Matsuto, Yasuyuki Mizunuma, Ikunosuke Okada, NIPPON SHOKUHIN KOGYO GAKKAISHI, 17, 385, 391, 397 (1970)), or the like, or a method analogous thereto. A commercially available product may also be used as the cyclotene analogous compound.

In one embodiment, the cyclotene analogous compound used in the present invention may be a chemically synthesized product produced by a chemical synthesis method, or an isolated product extracted and purified from a material containing a cyclotene analogous compound.

In the present invention, a material containing a cyclotene analogous compound may be used as it is or after purification to a desired degree, instead of the chemically synthesized product or isolated product of a cyclotene analogous compound, or in addition to the chemically synthesized product or isolated product. In the present invention, the amount of cyclotene analogous compound in the material may be measured by gas chromatography-mass spectrometry (GC-MS) or the like.

In the present invention, a substance capable of producing cyclotene or a cyclotene analogous compound by heating refers to a substance that does not contain cyclotene or a cyclotene analogous compound but can produce cyclotene and/or a cyclotene analogous compound when heated (in other words, a substance that can be a substance containing cyclotene and/or a cyclotene analogous compound when heated). The substance capable of producing cyclotene or a cyclotene analogous compound by heating may be composed of one kind of substance, or plural kinds (e.g., two kinds or more) of substances in combination.

Specific examples of the substance capable of producing cyclotene or a cyclotene analogous compound by heating include saccharides such as monosaccharides (e.g., ribose, xylose, arabinose, glucose, fructose, etc.), disaccharides (e.g., sucrose, maltose, lactose, etc.), oligo saccharide, polysaccharides (e.g., starch, cellulose, hemicellulose, etc.). It is preferably monosaccharide or disaccharide, more preferably ribose, xylose, arabinose, glucose, fructose, sucrose, maltose, or lactose, further preferably xylose, glucose or fructose, particularly preferably fructose. These may be used alone, or two or more kinds thereof may be used in combination.

When saccharide (e.g., at least one saccharide selected from the group consisting of ribose, xylose, arabinose, glucose, fructose, sucrose, maltose, and lactose, etc.) is used as the substance capable of producing cyclotene or a cyclotene analogous compound by heating, amino acid or a salt thereof may be used in combination. That is, when a substance capable of producing cyclotene or a cyclotene analogous compound by heating contains saccharide (e.g., at least one saccharide selected from the group consisting of ribose, xylose, arabinose, glucose, fructose, sucrose, maltose, and lactose, etc.), the substance may further contain amino acid or a salt thereof. A substance capable of producing cyclotene or a cyclotene analogous compound by heating and further containing saccharide in addition to amino acid or a salt thereof can improve the production efficiency of the cyclotene or the cyclotene analogous compound.

Examples of the amino acid or a salt thereof that a substance capable of producing cyclotene or a cyclotene analogous compound by heating may contain include aspartic acid, glutamic acid, methionine, valine, histidine and a salt thereof and the like. The amino acid that may be used in the present invention includes a D form and an L form. Either may be used in the present invention, and a DL form which is a racemic mixture may also be used.

An amino acid salt that may be used in the present invention is not particularly limited as long as it is edible. For acidic groups such as carboxyl group and the like, for example, salts with alkali metals such as sodium, potassium, and the like; salts with alkaline earth metals such as calcium, magnesium, and the like; ammonium salt; aluminum salt; zinc salt; salts with organic amines such as triethylamine, ethanolamine, morpholine, pyrrolidine, piperidine, piperazine, dicyclohexylamine, and the like; salts with basic amino acids such as arginine, lysine, and the like; and the like can be mentioned.

For basic groups such as amino group and the like, salts with inorganic acids such as hydrochloric acid, sulfuric acid, phosphoric acid, nitric acid, hydrobromic acid, and the like; salts with organic carboxylic acids such as acetic acid, citric acid, benzoic acid, maleic acid, fumaric acid, tartaric acid, succinic acid, tannic acid, butyric acid, hibenzic acid, pamoic acid, enanthic acid, decanoic acid, teoclic acid, salicylic acid, lactic acid, oxalic acid, mandelic acid, malic acid, and the like; salts with organic sulfonic acids such as methanesulfonic acid, benzenesulfonic acid, p-toluenesulfonic acid, and the like; and the like can be mentioned.

The amino acid or a salt thereof that may be contained in a substance capable of producing cyclotene or a cyclotene analogous compound by heating is preferably sodium aspartate or sodium glutamate, more preferably sodium glutamate.

The substance capable of producing cyclotene or a cyclotene analogous compound by heating preferably contains at least one saccharide selected from the group consisting of ribose, xylose, arabinose, glucose, fructose, sucrose, maltose, and lactose, and at least one amino acid or a salt thereof selected from the group consisting of aspartic acid, glutamic acid, methionine, valine, and histidine, and a salt thereof; more preferably contains at least one saccharide selected from the group consisting of xylose, glucose, and fructose, and at least one amino acid or a salt thereof selected from the group consisting of aspartic acid and glutamic acid, and a salt thereof; and particularly preferably contains fructose and sodium aspartate or sodium glutamate.

The production method of a substance capable of producing cyclotene or a cyclotene analogous compound by heating is not particularly limited, and it can be produced by a method known per se or a method analogous thereto. A commercially available product may also be used.

In one embodiment, a substance capable of producing cyclotene or a cyclotene analogous compound by heating may be a chemically synthesized product produced by a chemical synthesis method, or an isolated product extracted and purified from a material containing a substance capable of producing cyclotene or a cyclotene analogous compound by heating. For example, amino acid may be an isolated product extracted and purified from a material containing amino acid (e.g., yeast extract, protein hydrolysate, etc.).

In the present invention, a material containing a substance capable of producing cyclotene or a cyclotene analogous compound by heating may be used as it is or after purification to a desired degree, instead of the chemically synthesized product or isolated product of a material containing a substance capable of producing cyclotene or a cyclotene analogous compound by heating, or in addition to the chemically synthesized product or isolated product thereof. In the present invention, the content of a substance capable of producing cyclotene or a cyclotene analogous compound by heating in the material may be measured by gas chromatography-mass spectrometry (GC-MS).

Examples of oils and fats contained in the oil- or fat-containing composition used for heating cyclotene or the like in the present invention (in other words, the oil- or fat-containing composition used for the production of in-oil-heated substance of cyclotene or the like) include vegetable oils and fats such as rape seed oil, corn oil, soybean oil, sesame oil, rice oil, bran oil, safflower oil, coconut oil, palm oil, palm kernel oil, sunflower oil, perilla oil, perilla oil, flaxseed oil, olive oil, grapeseed oil, medium chain fatty acid oil or the like; animal oils and fats such as lard, beef tallow, chicken oil, mutton tallow, horse fat, fish oil, whale oil, butterfat or the like, and the like. In addition, transesterified oil obtained by transesterifying the aforementioned oils and fats, hydrogenated oil obtained by hydrogenating the aforementioned oils and fats, and the like can also be used. The aforementioned oils and fats may be refined (e.g., salad oil, etc.). These oils and fats may be used alone, or two or more kinds thereof may be used in combination.

In the present invention, an oil- or fat-containing composition that may be used for heating cyclotene or the like (i.e., cyclotene, cyclotene analogous compound, substance capable of producing cyclotene or cyclotene analogous compound by heating) may contain a component other than oils and fats (e.g., water, etc.) as long as the purpose of the present invention is not impaired. The content of the oils and fats in the oil- or fat-containing composition is preferably not less than 15 wt% with respect to the oil- or fat-containing composition and, since a superior in-oil-heated substance of cyclotene or the like can be obtained due to a mouth-coating feel enhancing effect, more preferably not less than 35 wt%, particularly preferably not less than 85 wt%. The upper limit of the content of the oils and fats in the oil- or fat-containing composition is not particularly limited and may be 100 wt% (that is, the oil- or fat-containing composition may consist only of oil or fat).

When an oil- or fat-containing composition that may be used for heating cyclotene or the like (i.e., cyclotene, cyclotene analogous compound, substance capable of producing cyclotene or cyclotene analogous compound by heating) contains oil or fat and water in one embodiment, the oil- or fat-containing composition may be a suspension in which oil or fat are suspended in water.

In one embodiment, when cyclotene is heated in an oil- or fat-containing composition, the concentration of cyclotene in the oil- or fat-containing composition is preferably not less than 0.00001 weight ppm, more preferably not less than 0.0005 weight ppm, further preferably not less than 0.005 weight ppm, still more preferably not less than 0.5 weight ppm, particularly preferably not less than 50 weight ppm, because an in-oil-heated substance capable of effectively enhancing a mouth-coating feel can be obtained. In this case, the concentration of cyclotene in the oil- or fat-containing composition is preferably not more than 25000 weight ppm and, because an in-oil-heated substance capable of enhancing a mouth-coating feel without imparting an off-flavor can be obtained, more preferably not more than 15000 weight ppm, particularly preferably not more than 12000 weight ppm. In this case, the concentration of cyclotene in the oil- or fat-containing composition is, in one embodiment, preferably 0.00001 to 25000 weight ppm, more preferably 0.0005 to 15000 weight ppm, particularly preferably 50 to 12000 weight ppm.

In another embodiment, when a cyclotene analogous compound is heated in an oil- or fat-containing composition, the concentration of the cyclotene analogous compound in the oil- or fat-containing composition is preferably not less than 0.00001 weight ppm, more preferably not less than 0.0005 weight ppm, further preferably not less than 0.005 weight ppm, still more preferably not less than 0.5 weight ppm, particularly preferably not less than 50 weight ppm, because an in-oil-heated substance capable of effectively enhancing the mouth-coating feel can be obtained. In this case, the concentration of the cyclotene analogous compound in the oil- or fat-containing composition is preferably not more than 25000 weight ppm and, because an in-oil-heated substance capable of enhancing the mouth-coating feel without imparting an off-flavor can be obtained, more preferably not more than 15000 weight ppm, particularly preferably not more than 12000 weight ppm. In this case, the concentration of the cyclotene analogous compound in the oil- or fat-containing composition is, in one embodiment, preferably 0.00001 to 25000 weight ppm, more preferably 0.0005 to 15000 weight ppm, particularly preferably 50 to 12000 weight ppm.

In another embodiment, when a substance capable of producing cyclotene or a cyclotene analogous compound by heating contains saccharide, and the substance is heated in an oil- or fat-containing composition, the concentration of the saccharide in the oil- or fat-containing composition is preferably not less than 1 weight ppm, more preferably not less than 10 weight ppm, particularly preferably not less than 50 weight ppm, because an in-oil-heated substance capable of effectively enhancing a mouth-coating feel can be obtained. In this case, the concentration of the saccharide in the oil- or fat-containing composition is preferably not more than 200000 weight ppm, more preferably not more than 500 weight ppm, particularly preferably not more than 150 weight ppm, because an in-oil-heated substance capable of effectively enhancing the mouth-coating feel without imparting an off-flavor can be obtained.

In addition, when a substance capable of producing cyclotene or a cyclotene analogous compound by heating contains an amino acid or a salt thereof in addition to saccharide, and the substance is heated in an oil- or fat-containing composition, the concentration of the amino acid or a salt thereof in the oil- or fat-containing composition is preferably not less than 1 weight ppm, more preferably not less than 10 weight ppm, particularly preferably not less than 50 weight ppm, because an in-oil-heated substance capable of effectively enhancing a mouth-coating feel can be obtained. In this case, the concentration of the amino acid or a salt thereof in the oil- or fat-containing composition is preferably not more than 200000 weight ppm, more preferably not more than 500 weight ppm, particularly preferably not more than 150 weight ppm, because an in-oil-heated substance capable of effectively enhancing the mouth-coating feel without imparting an off-flavor can be obtained. In this case, the concentration of the amino acid or a salt thereof in the oil- or fat-containing composition is, in one embodiment, preferably 1 to 200000 weight ppm, more preferably 10 to 500 weight ppm, particularly preferably 50 to 150 weight ppm.

When a substance capable of producing cyclotene or a cyclotene analogous compound by heating contains an amino acid or a salt thereof in addition to saccharide, and the substance is heated in an oil- or fat-containing composition, a weight ratio of the saccharide and the amino acid or a salt thereof (saccharide:amino acid or a salt thereof) in the oil- or fat-containing composition is preferably 1:0.02 to 50, more preferably 1:0.05 to 20, particularly preferably 1:0.1 to 10, because an in-oil-heated substance capable of effectively enhancing a mouth-coating feel can be obtained.

The heating temperature of cyclotene or the like (i.e., cyclotene, cyclotene analogous compound, substance capable of producing cyclotene or cyclotene analogous compound by heating) may be appropriately adjusted according to heating time and the like. It is preferably 40 to 200°C, more preferably 50 to 150°C, further preferably 50 to 120°C, particularly preferably 80 to 120°C, because in-oil-heated substance of cyclotene or the like more superior in the mouth-coating feel enhancing effect can be obtained.

The heating time of cyclotene or the like (i.e., cyclotene, cyclotene analogous compound, substance capable of producing cyclotene or cyclotene analogous compound by heating) may be appropriately adjusted according to heating temperature and the like. It is preferably 0.1 to 3840 min, more preferably 2.5 to 3840 min, more preferably 3.5 to 600 min, particularly preferably 8 to 100 min, because in-oil-heated substance of cyclotene or the like more superior in the mouth-coating feel enhancing effect can be obtained.

Cyclotene or the like (i.e., cyclotene, cyclotene analogous compound, substance capable of producing cyclotene or cyclotene analogous compound by heating) is heated in an oil- or fat-containing composition, and the obtained in-oil-heated substance of cyclotene or the like is separated from the oil- or fat-containing composition, and may be used in the enhancer of the present invention. Alternatively, the obtained in-oil-heated substance of cyclotene or the like may be used in the enhancer of the present invention together with the oil- or fat-containing composition without separating from the composition.

The enhancer of the present invention may further contain a heated substance of β-caryophyllene or a β-caryophyllene analogous compound (in other words, a heated substance of β-caryophyllene, or a heated substance of a β-caryophyllene analogous compound) as an active ingredient in addition to an in-oil-heated substance of cyclotene or the like.

In the present specification, "β-caryophyllene and β-caryophyllene analogous compound" are at times collectively referred to as "β-caryophyllene or the like" for convenience.

The production method of β-caryophyllene (CAS Registry Number: 87-44-5) used in the present invention is not particularly limited, and one produced by a method known per se (e.g., chemical synthesis method, enzyme method, fermentation method, extraction method, etc.) or a method analogous thereto may be used. A commercially available product may also be used as β-caryophyllene.

In one embodiment, β-caryophyllene used in the present invention may be a chemically synthesized product produced by a chemical synthesis method, or an isolated product extracted and purified from a material containing β-caryophyllene. Examples of the material containing β-caryophyllene include natural products such as agricultural, livestock and fishery products (e.g., black pepper, lavender, rosemary, ylang-ylang, clove, basil, oregano, cinnamon, hop, etc.); fermentation products such as culture solution obtained by culturing microorganisms, bacterial cells, or the like; and processed products thereof.

In the present invention, a material containing β-caryophyllene may be used as it is or after purification to a desired degree, instead of the chemically synthesized product or isolated product of β-caryophyllene, or in addition to the chemically synthesized product or isolated product thereof. The content of β-caryophyllene in the material may be measured by gas chromatography-mass spectrometry (GC-MS) or the like.

In the present invention, the "β-caryophyllene analogous compound" means a compound having a structure and properties similar to those of β-caryophyllene. For example, terpene hydrocarbons such as isocaryophyllene (CAS registry number: 118-65-0), β-pinene (CAS registry number: 127-91-3, 18172-67-3, etc.), sabinene (CAS registry number: 3387-41-5), eugenol (CAS registry number: 97-53-0), limonene (CAS registry number: 5989-27-5, etc.), linalool (CAS registry number: 78-70-6, etc.), linalool oxide (CAS registry number: 60047-17-8, etc.), p-cymene (CAS registry number: 99-87-6, etc.), farnesene (CAS registry number: 502-61-4, 26560-14-5, etc.), myrcene (CAS registry number: 123-35-3, etc.), ocimene (CAS registry number: 13877-91-3, etc.), α-phellandrene (CAS registry number: 99-83-2, etc.), α-terpinene (CAS registry number: 99-86-5), γ-terpinene (CAS registry number: 99-85-4), terpinolene (CAS registry number: 586-62-9, etc.) or the like; phenols such as 4-allyl-2,6-dimethoxyphenol (CAS registry number: 6627-88-9), 4-vinylphenol (CAS registry number: 2628-17-3, etc.) or the like, and the like can be mentioned. These compounds may be used alone, or two or more kinds thereof may be used in combination.

The production method of a β-caryophyllene analogous compound is not particularly limited, and can be produced by a method known per se or a method analogous thereto. For example, it may be a synthetic product or an extracted product. A commercially available product can also be utilized as the β-caryophyllene analogous compound.

In one embodiment, the β-caryophyllene analogous compound used in the present invention may be a chemically synthesized product produced by a chemical synthesis method, or an isolated product extracted and purified from a material containing a β-caryophyllene analogous compound.

In the present invention, a material containing a β-caryophyllene analogous compound may be used as it is or after purification to a desired degree, instead of the chemically synthesized product or isolated product of β-caryophyllene analogous compound, or in addition to the chemically synthesized product or isolated product thereof. In the present invention, the content of the β-caryophyllene analogous compound in the material may be measured by gas chromatography-mass spectrometry (GC-MS) or the like.

The heated substance of β-caryophyllene or the like (i.e., β-caryophyllene, β-caryophyllene analogous compound) may be obtained by heating β-caryophyllene or the like by any method. For example, those obtained by directly heating β-caryophyllene or the like, and those obtained by dissolving or dispersing β-caryophyllene or the like in a solvent or dispersion medium and then heating same (that is, obtained by heating β-caryophyllene or the like in a medium) can be mentioned. In one embodiment, when β-caryophyllene or the like is heated in a medium, the medium used is not particularly limited and, for example, lipids such as oil or fat, fatty acid, sterol, carotenoid, phospholipid, glycolipid, wax or the like; glycerol, aliphatic alcohol, and the like can be mentioned. Among the heated substances of β-caryophyllene or the like, one obtained by heating β-caryophyllene or the like in an oil- or fat-containing composition is also referred to as an "in-oil-heated substance" of β-caryophyllene or the like in the present invention.

In the present invention, when β-caryophyllene or the like is heated in an oil- or fat-containing composition, a usable oil- or fat-containing composition (in other words, oil- or fat-containing composition that may be used for producing in-oil-heated substance of β-caryophyllene or the like) may be the same as the oil- or fat-containing composition that may be used for heating the aforementioned cyclotene or the like, and preferred embodiments are also the same. In addition, the oil or fat contained in the oil- or fat-containing composition that may be used for heating β-caryophyllene or the like may also be the same as the oil or fat contained in the oil- or fat-containing composition that may be used for heating the aforementioned cyclotene or the like, and preferred embodiments are also the same.

When β-caryophyllene or the like is heated in an oil- or fat-containing composition, the concentration of β-caryophyllene or the like in the oil- or fat-containing composition is preferably not less than 0.0008 weight ppm, more preferably not less than 0.08 weight ppm, particularly preferably not less than 0.8 weight ppm, because an in-oil-heated substance capable of effectively enhancing a mouth-coating feel can be obtained. In this case, the concentration of β-caryophyllene or the like in the oil- or fat-containing composition is preferably not more than 100000 weight ppm, more preferably not more than 50000 weight ppm, particularly preferably not more than 5000 weight ppm, because an in-oil-heated substance capable of effectively enhancing a mouth-coating feel without imparting an off-flavor can be obtained. In this case, the concentration of β-caryophyllene or the like in the oil- or fat-containing composition is, in one embodiment, preferably 0.0008 to 100000 weight ppm, more preferably 0.08 to 50000 weight ppm, particularly preferably 0.8 to 5000 weight ppm.

The heating temperature and heating time of β-caryophyllene or the like (i.e., β-caryophyllene, β-caryophyllene analogous compound) are the same as those of the aforementioned cyclotene or the like (i.e., cyclotene, cyclotene analogous compound, substance capable of producing cyclotene or cyclotene analogous compound by heating), and the preferred ranges are also the same.

The β-caryophyllene or the like (i.e., β-caryophyllene, β-caryophyllene analogous compound) is heated in an oil- or fat-containing composition, and the obtained in-oil-heated substance of β-caryophyllene or the like is separated from the oil- or fat-containing composition, and may be used in the enhancer of the present invention. Alternatively, the obtained in-oil-heated substance of β-caryophyllene or the like may be used in the enhancer of the present invention together with the oil- or fat-containing composition without separating from the composition.

When the enhancer of the present invention contains, in one embodiment, an in-oil-heated substance of cyclotene or the like (i.e., cyclotene, cyclotene analogous compound, substance capable of producing cyclotene or cyclotene analogous compound by heating) and an in-oil-heated substance of β-caryophyllene or the like (i.e., β-caryophyllene, β-caryophyllene analogous compound), these in-oil-heated substances may be obtained by separately heating cyclotene or the like and β-caryophyllene or the like, or obtained by heating cyclotene or the like and β-caryophyllene or the like together (in other words, obtained by simultaneously heating in the same oil- or fat-containing composition).

The form of the enhancer of the present invention is not particularly limited, and examples thereof include solid (including powder, granule, etc.), liquid (including slurry, etc.), gel, paste, and the like.

The enhancer of the present invention may be composed only of an in-oil-heated substance of cyclotene or the like (and oil- or fat-containing composition used for heating cyclotene or the like), or only of an in-oil-heated substance of cyclotene or the like (and oil- or fat-containing composition used for heating cyclotene or the like), and a heated substance of β-caryophyllene or the like alone. In addition thereto, a conventional base may be further contained according to the form and the like of the mouth-coating feel enhancer of the present invention.

When the enhancer of the present invention is in the form of liquid, examples of the base include water, ethanol, glycerin, propylene glycol, and the like.

When the enhancer of the present invention is in the form of a solid, examples of the base include various saccharides such as starch, dextrin, cyclodextrin, sucrose, glucose or the like, protein, peptide, salt, solid fat, silicon dioxide, mixtures thereof, yeast fungus and various powder extracts and the like.

The enhancer of the present invention may further contain, for example, excipient, pH adjuster, antioxidant, thickening stabilizer, sweetener (e.g., sugars, etc.), acidulant, spices, colorant and the like, in addition to in-oil-heated substance of cyclotene or the like and heated substance of β-caryophyllene or the like, as long as the purpose of the present invention is not impaired.

The enhancer of the present invention may be produced by a method known per se. The enhancer of the present invention may undergo, for example, a concentration treatment, a dry treatment, a decolorization treatment and the like, each alone or in combination.

The in-oil-heated substance of cyclotene or the like (i.e., cyclotene, cyclotene analogous compound, substance capable of producing cyclotene or cyclotene analogous compound by heating) which is contained in the enhancer of the present invention is a substance obtained by heating cyclotene or the like in an oil- or fat-containing composition, as mentioned above. Therefore, the production method of the enhancer of the present invention may include heating cyclotene or the like in an oil- or fat-containing composition. In addition, when the enhancer of the present invention further contains a heated substance of β-caryophyllene or the like (i.e., β-caryophyllene, β-caryophyllene analogous compound) in addition to an in-oil-heated substance of cyclotene or the like, since the heated substance of β-caryophyllene or the like is a substance obtained by heating β-caryophyllene or the like, as mentioned above, the production method of the enhancer of the present invention may further include heating β-caryophyllene or the like in addition to heating cyclotene or the like in an oil- or fat-containing composition. The heated substance of β-caryophyllene or the like may be, in one embodiment, an in-oil-heated substance of β-caryophyllene or the like, and the production method of the enhancer of the present invention may include heating β-caryophyllene or the like in an oil- or fat-containing composition in addition to heating cyclotene or the like in an oil- or fat-containing composition.

In the production method of the enhancer of the present invention, an oil- or fat-containing composition that may be used for heating cyclotene or the like (i.e., cyclotene, cyclotene analogous compound, substance capable of producing cyclotene or cyclotene analogous compound by heating) may be the same as the aforementioned oil- or fat-containing composition that may be used for heating the cyclotene or the like, and preferred embodiments are also the same. When the production method of the enhancer of the present invention includes heating β-caryophyllene or the like in an oil- or fat-containing composition, the oil- or fat-containing composition that may be used for heating β-caryophyllene or the like (i.e., β-caryophyllene, β-caryophyllene analogous compound) may be the same as the aforementioned oil- or fat-containing composition that may be used for heating the cyclotene or the like, and preferred embodiments are also the same. The heating temperature and heating time of cyclotene or the like and β-caryophyllene or the like are the same as the aforementioned heating temperature and heating time of the cyclotene or the like, and preferred embodiments are also the same.

When the production method of the enhancer of the present invention includes heating β-caryophyllene or the like in an oil- or fat-containing composition in addition to heating cyclotene or the like in an oil- or fat-containing composition, the heating of cyclotene or the like and the heating of β-caryophyllene or the like may be performed separately, or the heating of cyclotene or the like and the heating of β-caryophyllene or the like may be performed concurrently (in other words, cyclotene or the like and β-caryophyllene or the like may be simultaneously heated in the same oil- or fat-containing composition).

The enhancer of the present invention can be used by adding to foods. By adding the enhancer of the present invention to a food, the mouth-coating feel of the food can be enhanced. By adding the enhancer of the present invention to a food, the mouth-coating feel can be enhanced without imparting an off-flavor to the food.

In the present invention, the "mouth-coating feel" is the sensation that the oral cavity is covered with a thin film, the sensation that the oral cavity is covered with oil or fat, or an oil or fat-like film, a smooth sensation that is felt in the oral cavity, and an oil or fat-like rich sensation (thickness) that spreads throughout the oral cavity, each of which is noticeably felt when a oil or fat, or a solution or food containing oil or fat is contained in the oral cavity. The "enhancement" of the mouth-coating feel means that at least one of the above-mentioned sensations is enhanced. The presence or absence and the degree of the mouth-coating feel can be evaluated by sensory evaluation by an expert panel.

In the present invention, the "off-flavor" refers to an unpleasant flavor (taste, aroma) that is not generally perceived in foods. The mode when an off-flavor is imparted to a food includes, for example, when a specific undesirable taste or aroma is imparted to foods, when the original taste and aroma of the food change unfavorably by adding a component that is not originally contained in the food, and the like. The presence or absence and the degree of the off-flavor can be evaluated by sensory evaluation by an expert panel.

In the present invention, the "food" is a concept that broadly includes those that can be ingested orally, and also includes, for example, beverages, seasonings, food additives, and the like.

The food to which the enhancer of the present invention is added may be originally provided (sold, distributed) in a state suitable for eating, or may be provided in a state requiring predetermined processing or cooking to reach a state suitable for eating. For example, the food to which the enhancer of the present invention may be added may be provided as a concentrate or the like that needs to be diluted with water or the like to reach a state suitable for eating.

The food to which the enhancer of the present invention is added is not particularly limited as long as it may be expected to show a mouth-coating feel. For example, foods containing oil or fat such as oil and fat (e.g., vegetable oil and fat, animal oil and fat, etc.), mayonnaise, soup, dressing, curry, skin-wrapped food (e.g., Gyoza, Shumai, Wonton, Baozi, Xiaolongbao, Ravioli, Spring roll, etc.), cooked rice (e.g., fried rice, Paella, Pilaf, etc.), deep-fried food (e.g., Croquette, minced meat cutlet, etc.), hamburger steak, meatball, sausage, snacks, chocolate, cookie, bread, milk and dairy products containing oil or fat (e.g., raw milk, cow's milk, low-fat milk, cream, butter, margarine, fat spread, cheese, yogurt, etc.), gratin, beverages containing oil or fat, noodles containing oil or fat (e.g., fried noodles, etc.) or the like; and foods not containing oil and fat such as oil-free dressing, milk and dairy products not containing oil and fat (e.g., fat-free milk, skim milk powder, fat-free yogurt, etc.), beverages not containing oil and fat (e.g., coffee drinks, etc.), noodles not containing oil and fat (e.g., non-fried noodles, raw noodles, pasta, dough sheet, etc.) or the like can be mentioned. As used herein, the food containing oil or fat may contain only oil or fat, that is, the food containing oil or fat may be the oil or fat itself.

Since the enhancer of the present invention can remarkably enhance the mouth-coating feel felt when oil or fat is contained in the oral cavity, it is preferably used by adding to a food containing oil or fat. That is, the enhancer of the present invention is preferably for a food containing oil or fat.

The oil or fat contained in a food containing oil or fat to which the enhancer of the present invention can be applied is not particularly limited as long as it is edible. Examples include vegetable oils and fats such as rape seed oil, corn oil, soybean oil, sesame oil, rice oil, bran oil, safflower oil, coconut oil, palm oil, palm kernel oil, sunflower oil, perilla oil, perilla oil, flaxseed oil, olive oil, grapeseed oil, medium chain fatty acid oil or the like; animal oils and fats such as lard, beef tallow, chicken oil, mutton tallow, horse fat, fish oil, whale oil, butterfat or the like, and the like. In addition, transesterified oil obtained by transesterifying the aforementioned oils and fats, hydrogenated oil obtained by hydrogenating the aforementioned oils and fats, and the like can also be used. The aforementioned oils and fats may be refined (e.g., salad oil, etc.). These oils and fats may be used alone, or two or more kinds thereof may be used in combination.

The content of the oil or fat in a food containing oil or fat for which the enhancer of the present invention can be used is not particularly limited. It is preferably 0.1 to 100 wt%, more preferably 0.5 to 100 wt%, because the effect can be more clearly exhibited.

The method and the conditions for adding the enhancer of the present invention to a food are not particularly limited and can be appropriately determined according to the form of the enhancer of the present invention, the kind of the food, and the like. The timing of addition of the enhancer of the present invention to a food is not particularly limited and it may be added at any time point. For example, during the production of food, after the completion of food (immediately before eating food, during eating food, etc.) and the like can be mentioned. The enhancer of the present invention may be added to a raw material before production of a food.

### <Method for enhancing a mouth-coating feel>

The present invention also provides a method for enhancing a mouth-coating feel, including adding an in-oil-heated substance of cyclotene, a cyclotene analogous compound, or a substance capable of producing cyclotene or a cyclotene analogous compound by heating (in other words, in-oil-heated substance of cyclotene, in-oil-heated substance of cyclotene analogous compound, or in-oil-heated substance of a substance capable of producing cyclotene or a cyclotene analogous compound by heating) (at times simply referred to as "the enhancing method of the present invention" in the present specification).

The in-oil-heated substance of cyclotene or the like (i.e., cyclotene, cyclotene analogous compound, substance capable of producing cyclotene or cyclotene analogous compound by heating) used in the enhancing method of the present invention is similar to the aforementioned in-oil-heated substance of cyclotene or the like that may be contained in the enhancer of the present invention, and preferred embodiments are also the same. They may also be produced in the same manner as in the aforementioned methods.

The in-oil-heated substance of cyclotene or the like (i.e., cyclotene, cyclotene analogous compound, substance capable of producing cyclotene or cyclotene analogous compound by heating) that may be used in the enhancing method of the present invention is a substance obtained by heating cyclotene or the like in an oil- or fat-containing composition, as mentioned above. Therefore, the enhancing method of the present invention may include heating cyclotene or the like in an oil- or fat-containing composition and adding the obtained in-oil-heated substance of cyclotene or the like.

The enhancing method of the present invention may further include, in addition to adding an in-oil-heated substance of cyclotene or the like, adding a heated substance of β-caryophyllene or β-caryophyllene analogous compound (in other words, a heated substance of β-caryophyllene or a heated substance of β-caryophyllene analogous compound).

The heated substances of β-caryophyllene or the like (i.e., β-caryophyllene, β-caryophyllene analogous compound) that may be used in the enhancing method of the present invention are similar to the aforementioned in-oil-heated substance of β-caryophyllene or the like that may be contained in the enhancer of the present invention, and preferred embodiments are also the same. They may also be produced in the same manner as in the aforementioned methods.

The in-oil-heated substances of β-caryophyllene or the like (i.e., β-caryophyllene, β-caryophyllene analogous compound) that may be used in the enhancing method of the present invention are substances obtained by heating β-caryophyllene or the like in an oil- or fat-containing composition, as mentioned above. Therefore, the enhancing method of the present invention may include, in addition to heating cyclotene or the like in an oil- or fat-containing composition, and adding the obtained in-oil-heated substance of cyclotene or the like, heating β-caryophyllene or the like and adding the obtained heated substance of β-caryophyllene or the like. In addition, the heated substance of β-caryophyllene or the like may be in-oil-heated substance of β-caryophyllene or the like in one embodiment. Thus, the enhancing method of the present invention may include, in addition to heating cyclotene or the like in an oil- or fat-containing composition, and adding the obtained in-oil-heated substance of cyclotene or the like, heating β-caryophyllene or the like in an oil- or fat-containing composition, and adding the obtained in-oil-heated substance of β-caryophyllene or the like.

According to the enhancing method of the present invention, a mouth-coating feel of a food can be enhanced. According to the enhancing method of the present invention, a mouth-coating feel of a food can be enhanced without imparting an off-flavor to the food. Examples of the food whose mouth-coating feel can be enhanced by the enhancing method of the present invention include those similar to the examples of the foods to which the enhancer of the present invention may be added, and the preferred ones are also the same.

The enhancing method of the present invention can remarkably enhance the mouth-coating feel felt when oil or fat is contained in the oral cavity. Thus, it is preferably a method for enhancing the mouth-coating feel of a food containing oil or fat.

In the enhancing method of the present invention, the method and the conditions for adding an in-oil-heated substance of cyclotene or the like, and heated substance of β-caryophyllene or the like are not particularly limited, and can be appropriately determined according to the kind of the food and the like. The timing of addition of the in-oil-heated substance of cyclotene or the like, and the heated substance of β-caryophyllene or the like is not particularly limited, and they may be added at any time point. For example, during the production of food, after the completion of food (immediately before eating food, during eating food, etc.) and the like can be mentioned. An in-oil-heated substance of cyclotene or the like, and a heated substance of β-caryophyllene or the like may be added to a raw material before production of a food.

### <Food and production method thereof>

The present invention also provides a method for producing a food, including adding an in-oil-heated substance of cyclotene, a cyclotene analogous compound, or a substance capable of producing cyclotene or a cyclotene analogous compound by heating (in other words, in-oil-heated substance of cyclotene, in-oil-heated substance of cyclotene analogous compound, or in-oil-heated substance of a substance capable of producing cyclotene or a cyclotene analogous compound by heating) (sometimes simply referred to as "the production method of the present invention" in the present specification).

The in-oil-heated substance of cyclotene or the like (i.e., cyclotene, cyclotene analogous compound, substance capable of producing cyclotene or cyclotene analogous compound by heating) used in the production method of the present invention is similar to the aforementioned in-oil-heated substance of cyclotene or the like that may be contained in the enhancer of the present invention, and preferred embodiments are also the same. They may also be produced in the same manner as in the aforementioned methods.

The in-oil-heated substance of cyclotene or the like (i.e., cyclotene, cyclotene analogous compound, substance capable of producing cyclotene or cyclotene analogous compound by heating) that may be used in the production method of the present invention is a substance obtained by heating cyclotene or the like in an oil- or fat-containing composition, as mentioned above. Therefore, the production method of the present invention may include heating cyclotene or the like in an oil- or fat-containing composition and adding the obtained in-oil-heated substance of cyclotene or the like.

The production method of the present invention may further include, in addition to adding an in-oil-heated substance of cyclotene or the like, adding a heated substance of β-caryophyllene or β-caryophyllene analogous compound (in other words, a heated substance of β-caryophyllene or a heated substance of β-caryophyllene analogous compound).

The heated substances of β-caryophyllene or the like (i.e., β-caryophyllene, β-caryophyllene analogous compound) that may be used in the production method of the present invention are similar to the aforementioned in-oil-heated substance of β-caryophyllene or the like that may be contained in the enhancer of the present invention, and preferred embodiments are also the same. They may also be produced in the same manner as in the aforementioned methods.

The heated substances of β-caryophyllene or the like (i.e., β-caryophyllene, β-caryophyllene analogous compound) that may be used in the production method of the present invention are substances obtained by heating β-caryophyllene or the like, as mentioned above. Therefore, the production method of the present invention may include, in addition to heating cyclotene or the like in an oil- or fat-containing composition, and adding the obtained in-oil-heated substance of cyclotene or the like, heating β-caryophyllene or the like and adding the obtained heated substance of β-caryophyllene or the like. In addition, the heated substance of β-caryophyllene or the like may be in-oil-heated substance of β-caryophyllene or the like in one embodiment. Thus, the production method of the present invention may include, in addition to heating cyclotene or the like in an oil- or fat-containing composition, and adding the obtained in-oil-heated substance of cyclotene or the like, heating β-caryophyllene or the like in an oil- or fat-containing composition, and adding the obtained in-oil-heated substance of β-caryophyllene or the like.

In the production method of the present invention, the method and the conditions for adding an in-oil-heated substance of cyclotene or the like, and heated substance of β-caryophyllene or the like are not particularly limited, and can be appropriately determined according to the kind of the food and the like. The timing of addition of the in-oil-heated substance of cyclotene or the like, and the heated substance of β-caryophyllene or the like is not particularly limited and they may be added at any time point from the start to the completion of the production of the food. An in-oil-heated substance of cyclotene or the like, and a heated substance of β-caryophyllene or the like may be added to a raw material before production of a food.

The production method of the present invention may include as appropriate a processing step and a cooking step conventionally used in food production, according to the kind and the like of the food to be produced, in addition to the addition of an in-oil-heated substance of cyclotene or the like and a heated substance of β-caryophyllene or the like.

According to the production method of the present invention, a food containing an in-oil-heated substance of cyclotene or the like can be produced. According to the production method of the present invention, a food containing an in-oil-heated substance of cyclotene or the like and having an enhanced mouth-coating feel can also be produced. Also, according to the production method of the present invention, a food containing an in-oil-heated substance of cyclotene or the like, having an enhanced mouth-coating feel, and containing no off-flavor can also be produced.

According to the production method of the present invention, a food containing an in-oil-heated substance of cyclotene or the like and a heated substance of β-caryophyllene or the like can be produced. According to the production method of the present invention, a food containing an in-oil-heated substance of cyclotene or the like and a heated substance of β-caryophyllene or the like, and having an enhanced mouth-coating feel can be produced. Also, according to the production method of the present invention, a food containing an in-oil-heated substance of cyclotene or the like and a heated substance of β-caryophyllene or the like, having an enhanced mouth-coating feel, and containing no off-flavor can be produced.

Examples of the food that may be produced by the production method of the present invention include those similar to the examples of the foods to which the enhancer of the present invention may be added, and the preferred ones are also the same.

The production method of the present invention is preferably a method for producing a food containing oil or fat, more preferably, a method for producing a food with an enhanced mouth-coating feel and containing oil or fat, particularly preferably, a method for producing an oil- or fat-containing food having an enhanced mouth-coating feel and free of an off-flavor.

The present invention is explained in more detail in the following by referring to Examples, but the present invention is not limited at all by these examples. In the present specification, the "%" and "ppm" mean "wt%" and "weight ppm" unless otherwise specified.

### [Example]

### (Experimental Example 1)

### <Positive control and negative control>

As a positive control, general commercially available mayonnaise (manufactured by Ajinomoto Co., Inc., trade name "Pure Select (registered trade mark) mayonnaise", oil and fat content: 73%) was used. As a negative control, commercially available mayonnaise (manufactured by Ajinomoto Co., Inc., trade name "Pure Select (registered trade mark) KOKUUMA (registered trade mark) 65% Calorie Cut", oil and fat content: 23%) with a smaller oil and fat content as compared with positive control mayonnaise was used.

### <Production of evaluation sample 1-1>

Unheated safflower oil (manufactured by Ajinomoto Co., Inc.) was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 1-1") .

### <Production of evaluation sample 1-2>

Safflower oil (manufactured by Ajinomoto Co., Inc.) was heated in a water bath (manufactured by TOKYO RIKAKIKAI CO, LTD) at 100°C for 30 min. The safflower oil after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 1-2").

### <Production of evaluation sample 1-3>

Cyclotene (manufactured by Sigma-Aldrich) was added to safflower oil (manufactured by Ajinomoto Co., Inc.) and dissolved to a cyclotene concentration of 100 weight ppm with respect to the safflower oil. The obtained oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 1-3").

### <Production of evaluation sample 1-4>

Cyclotene (manufactured by Sigma-Aldrich) was added to safflower oil (manufactured by Ajinomoto Co., Inc.) and dissolved to a cyclotene concentration of 100 weight ppm with respect to the safflower oil. The obtained oil solution was heated in a water bath (manufactured by TOKYO RIKAKIKAI CO, LTD) at 100°C for 30 min. The oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 1-4").

### <Sensory evaluation>

Sensory evaluation was performed on the strength of the mouth-coating feel and the presence or absence of the off-flavor in the evaluation samples 1-1 to 1-4.

For the evaluation of a mouth-coating feel, a panel of 4 experts ate each mayonnaise of positive control, negative control and evaluation samples 1-1 to 1-4, and graded the evaluation samples in 0.1 point increments in the range of 0.0 - 5.0 points, with the positive control being 5.0 points and the negative control being 0.0 point (non-blind), and the obtained scores of the panel of 4 experts were averaged. When the score was 2.0 points or more, the mouth-coating feel enhancing effect was determined to be superior. The panel of 4 experts was trained in advance so that the panel has common understanding as to the degree of change in the mouth-coating feel required to change the score by 0.1 points.

For the evaluation of an off-flavor, the panel of 4 experts ate each mayonnaise of evaluation samples 1-1 to 1-4, and made a judgment (non-blind) by consensus on the presence or absence of an off-flavor (taste and aroma (e.g., chemical odor) that mayonnaise does not originally have).

The results are shown in the following Table 1.

**[Table 1]**

| evaluation sample | cyclotene concentration (weight ppm) in solvent | solvent | whether solvent was heated | strength of mouth-coating feel | off-flavor |
|---|---|---|---|---|---|
| 1-1 | 0 | safflower oil | not heated | 0.1 | none |
| 1-2 | 0 | safflower oil | heated | 0.2 | none |
| 1-3 | 100 | safflower oil | not heated | 0.7 | none |
| 1-4 | 100 | safflower oil | heated | 3.8 | none |

As is clear from the results of Table 1, the evaluation sample 1-4 of the present invention containing an in-oil-heated substance of cyclotene added thereto showed a remarkably improved mouth-coating feel. This evaluation sample did not have an off-flavor.

From the results, it was confirmed that it was confirmed that an in-oil-heated substance of cyclotene can effectively enhance the mouth-coating feel without imparting an off-flavor to foods.

### (Experimental Example 2)

### <Positive control and negative control>

For positive control and negative control, commercially available mayonnaise similar to that in Experimental Example 1 was used.

### <Production of evaluation sample 2-1>

Cyclotene (manufactured by Sigma-Aldrich) was added to water and dissolved to a cyclotene concentration of 100 weight ppm with respect to the water. The obtained aqueous solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 2-1") .

### <Production of evaluation sample 2-2>

Cyclotene (manufactured by Sigma-Aldrich) was added to water and dissolved to a cyclotene concentration of 100 weight ppm with respect to the water. The obtained aqueous solution was heated in a water bath (manufactured by TOKYO RIKAKIKAI CO, LTD) at 100°C for 30 min. The aqueous solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 2-2") .

### <Production of evaluation sample 2-3>

In the same manner as in evaluation sample 2-1 except that propylene glycol (manufactured by Sigma-Aldrich) was used instead of water as the solvent of cyclotene, an evaluation sample was produced (hereinafter to be referred to as "evaluation sample 2-3").

### <Production of evaluation sample 2-4>

In the same manner as in evaluation sample 2-2 except that propylene glycol (manufactured by Sigma-Aldrich) was used instead of water as the solvent of cyclotene, an evaluation sample was produced (hereinafter to be referred to as "evaluation sample 2-4").

### <Production of evaluation sample 2-5>

In the same manner as in evaluation sample 2-1 except that safflower oil (manufactured by Ajinomoto Co., Inc.) was used instead of water as the solvent of cyclotene, an evaluation sample was produced (hereinafter to be referred to as "evaluation sample 2-5").

### <Production of evaluation sample 2-6>

In the same manner as in evaluation sample 2-2 except that safflower oil (manufactured by Ajinomoto Co., Inc.) was used instead of water as the solvent of cyclotene, an evaluation sample was produced (hereinafter to be referred to as "evaluation sample 2-6").

### <Production of evaluation sample 2-7>

In the same manner as in evaluation sample 2-1 except that a water suspension containing 20 wt% of safflower oil (manufactured by Ajinomoto Co., Inc.) was used instead of water as the solvent of cyclotene, an evaluation sample was produced (hereinafter to be referred to as "evaluation sample 2-7").

### <Production of evaluation sample 2-8>

In the same manner as in evaluation sample 2-2 except that a water suspension containing 20 wt% of safflower oil (manufactured by Ajinomoto Co., Inc.) was used instead of water as the solvent of cyclotene, an evaluation sample was produced (hereinafter to be referred to as "evaluation sample 2-8").

### <Production of evaluation sample 2-9>

In the same manner as in evaluation sample 2-1 except that a water suspension containing 40 wt% of safflower oil (manufactured by Ajinomoto Co., Inc.) was used instead of water as the solvent of cyclotene, an evaluation sample was produced (hereinafter to be referred to as "evaluation sample 2-9").

### <Production of evaluation sample 2-10>

In the same manner as in evaluation sample 2-2 except that a water suspension containing 40 wt% of safflower oil (manufactured by Ajinomoto Co., Inc.) was used instead of water as the solvent of cyclotene, an evaluation sample was produced (hereinafter to be referred to as "evaluation sample 2-10").

### <Production of evaluation sample 2-11>

In the same manner as in evaluation sample 2-1 except that rape seed oil (manufactured by Ajinomoto Co., Inc.) was used instead of water as the solvent of cyclotene, an evaluation sample was produced (hereinafter to be referred to as "evaluation sample 2-11").

### <Production of evaluation sample 2-12>

In the same manner as in evaluation sample 2-2 except that rape seed oil (manufactured by Ajinomoto Co., Inc.) was used instead of water as the solvent of cyclotene, an evaluation sample was produced (hereinafter to be referred to as "evaluation sample 2-12").

### <Production of evaluation sample 2-13>

In the same manner as in evaluation sample 2-1 except that soybean oil (manufactured by Ajinomoto Co., Inc.) was used instead of water as the solvent of cyclotene, an evaluation sample was produced (hereinafter to be referred to as "evaluation sample 2-13").

### <Production of evaluation sample 2-14>

In the same manner as in evaluation sample 2-2 except that soybean oil (manufactured by Ajinomoto Co., Inc.) was used instead of water as the solvent of cyclotene, an evaluation sample was produced (hereinafter to be referred to as "evaluation sample 2-14").

### <Production of evaluation sample 2-15>

In the same manner as in evaluation sample 2-1 except that palm oil (manufactured by J-OIL MILLS, Inc.) was used instead of water as the solvent of cyclotene, an evaluation sample was produced (hereinafter to be referred to as "evaluation sample 2-15").

### <Production of evaluation sample 2-16>

In the same manner as in evaluation sample 2-2 except that palm oil (manufactured by J-OIL MILLS, Inc.) was used instead of water as the solvent of cyclotene, an evaluation sample was produced (hereinafter to be referred to as "evaluation sample 2-16").

### <Production of evaluation sample 2-17>

In the same manner as in evaluation sample 2-1 except that medium chain fatty acid oil (manufactured by FUJI OIL CO., LTD.) was used instead of water as the solvent of cyclotene, an evaluation sample was produced (hereinafter to be referred to as "evaluation sample 2-17").

### <Production of evaluation sample 2-18>

In the same manner as in evaluation sample 2-2 except that medium chain fatty acid oil (manufactured by FUJI OIL CO., LTD.) was used instead of water as the solvent of cyclotene, an evaluation sample was produced (hereinafter to be referred to as "evaluation sample 2-18").

### <Production of evaluation sample 2-19>

In the same manner as in evaluation sample 2-1 except that lard (manufactured by MEGMILK SNOW BRAND Co., Ltd.) was used instead of water as the solvent of cyclotene, an evaluation sample was produced (hereinafter to be referred to as "evaluation sample 2-19").

### <Production of evaluation sample 2-20>

In the same manner as in evaluation sample 2-2 except that lard (manufactured by MEGMILK SNOW BRAND Co., Ltd.) was used instead of water as the solvent of cyclotene, an evaluation sample was produced (hereinafter to be referred to as "evaluation sample 2-20").

### <Sensory evaluation>

Sensory evaluation was performed on the strength of the mouth-coating feel and the presence or absence of the off-flavor in the evaluation samples 2-1 to 2-20.

The mouth-coating feel and the off-flavor were respectively evaluated by a method similar to that in Experimental Example 1.

The results are shown in the following Table 2 and Table 3.

**[Table 2]**

| evaluation sample | cyclotene concentration (weight ppm) in solvent | solvent | whether solvent was heated | strength of mouth-coating feel | off-flavor |
|---|---|---|---|---|---|
| 2-1 | 100 | water | not heated | 0.3 | none |
| 2-2 | 100 | water | heated | 0.6 | none |
| 2-3 | 100 | propylene glycol | not heated | 0.3 | none |
| 2-4 | 100 | propylene glycol | heated | 0.6 | none |
| 2-5 | 100 | safflower oil | not heated | 0.7 | none |
| 2-6 | 100 | safflower oil | heated | 4.1 | none |
| 2-7 | 100 | safflower oil 20%-containing water suspension | not heated | 0.6 | none |
| 2-8 | 100 | safflower oil 20%-containing water suspension | heated | 2.0 | none |
| 2-9 | 100 | safflower oil 40%-containing water suspension | not heated | 0.8 | none |
| 2-10 | 100 | safflower oil 40%-containing water suspension | heated | 2.4 | none |

**[Table 3]**

| evaluation sample | cyclotene concentration (weight ppm) in solvent | solvent | whether solvent was heated | strength of mouth-coating feel | off-flavor |
|---|---|---|---|---|---|
| 2-11 | 100 | rape seed oil | not heated | 0.9 | none |
| 2-12 | 100 | rape seed oil | heated | 3.8 | none |
| 2-13 | 100 | soybean oil | not heated | 0.5 | none |
| 2-14 | 100 | soybean oil | heated | 4.0 | none |
| 2-15 | 100 | palm oil | not heated | 0.7 | none |
| 2-16 | 100 | palm oil | heated | 4.0 | none |
| 2-17 | 100 | medium chain fatty acid oil | not heated | 0.3 | none |
| 2-18 | 100 | medium chain fatty acid oil | heated | 3.9 | none |
| 2-19 | 100 | lard | not heated | 0.8 | none |
| 2-20 | 100 | lard | heated | 4.2 | none |

As is clear from the results of Table 2, evaluation sample 2-6 of the present invention in which cyclotene was heated in oil or fat, evaluation sample 2-8 of the present invention in which cyclotene was heated in a water suspension containing 20 wt% of oil or fat, and evaluation sample 2-10 of the present invention in which cyclotene was heated in a water suspension containing 40 wt% of oil or fat showed a remarkably improved mouth-coating feel. These evaluation samples did not have an off-flavor.

Also, as is clear from the results of Table 3, the evaluation samples 2-12, 2-14, 2-16, 2-18, and 2-20 of the present invention, in which cyclotene was heated in various oil or fat, all showed a remarkably improved mouth-coating feel. These evaluation samples did not have an off-flavor.

### (Experimental Example 3)

### <Positive control and negative control>

For positive control and negative control, commercially available mayonnaise similar to that in Experimental Example 1 was used.

### <Production of evaluation samples 3-1, 3-3, 3-5, 3-7, 3-9>

Cyclotene (manufactured by Sigma-Aldrich) was added to safflower oil (manufactured by Ajinomoto Co., Inc.) and dissolved to each cyclotene concentration shown in the following Table 4 (0.01 weight ppm, 1 weight ppm, 100 weight ppm, 10000 weight ppm, 20000 weight ppm) with respect to the safflower oil. The obtained each oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce evaluation samples (hereinafter to be respectively referred to as "evaluation sample 3-1", "evaluation sample 3-3", "evaluation sample 3-5", "evaluation sample 3-7", "evaluation sample 3-9").

### <Production of evaluation samples 3-2, 3-4, 3-6, 3-8, 3-10>

Cyclotene (manufactured by Sigma-Aldrich) was added to safflower oil (manufactured by Ajinomoto Co., Inc.) and dissolved to each cyclotene concentration shown in the following Table 4 (0.01 weight ppm, 1 weight ppm, 100 weight ppm, 10000 weight ppm, 20000 weight ppm) with respect to the safflower oil. The obtained each oil solution was heated in a water bath (manufactured by TOKYO RIKAKIKAI CO, LTD) at 100°C for 30 min. Each oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce evaluation samples (hereinafter to be respectively referred to as "evaluation sample 3-2", "evaluation sample 3-4", "evaluation sample 3-6", "evaluation sample 3-8", "evaluation sample 3-10").

### <Sensory evaluation>

Sensory evaluation was performed on the strength of the mouth-coating feel and the presence or absence of the off-flavor in the evaluation samples 3-1 to 3-10.

The mouth-coating feel and the off-flavor were respectively evaluated by a method similar to that in Experimental Example 1.

The results are shown in the following Table 4.

**[Table 4]**

| evaluation sample | cyclotene concentration (weight ppm) in solvent | solvent | whether solvent was heated | strength of mouth-coating feel | off-flavor |
|---|---|---|---|---|---|
| 3-1 | 0.01 | safflower oil | not heated | 0.6 | none |
| 3-2 | 0.01 | safflower oil | heated | 2.1 | none |
| 3-3 | 1 | safflower oil | not heated | 0.6 | none |
| 3-4 | 1 | safflower oil | heated | 2.9 | none |
| 3-5 | 100 | safflower oil | not heated | 0.9 | none |
| 3-6 | 100 | safflower oil | heated | 3.8 | none |
| 3-7 | 10000 | safflower oil | not heated | 1.3 | none |
| 3-8 | 10000 | safflower oil | heated | 3.9 | none |
| 3-9 | 20000 | safflower oil | not heated | 1.5 | yes |
| 3-10 | 20000 | safflower oil | heated | 3.6 | yes |

As is clear from the results of Table 4, the evaluation samples 3-2, 3-4, 3-6, 3-8, and 3-10 of the present invention, in which cyclotene was heated at each concentration in oil or fat, all showed a remarkably improved mouth-coating feel. In addition, evaluation samples 3-2, 3-4, 3-6, and 3-8 did not have an off-flavor.

### (Experimental Example 4)

### <Positive control and negative control>

For positive control and negative control, commercially available mayonnaise similar to that in Experimental Example 1 was used.

### <Production of evaluation sample 4-1>

Sodium glutamate (manufactured by Ajinomoto Co., Inc.) was added to safflower oil (manufactured by Ajinomoto Co., Inc.) and dissolved to a sodium glutamate concentration of 100 weight ppm with respect to the safflower oil. The obtained oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 4-1").

### <Production of evaluation sample 4-2>

Sodium glutamate (manufactured by Ajinomoto Co., Inc.) was added to safflower oil (manufactured by Ajinomoto Co., Inc.) to a sodium glutamate concentration of 100 weight ppm with respect to the safflower oil. The obtained oily liquid was heated in a water bath (manufactured by TOKYO RIKAKIKAI CO, LTD) at 100°C for 30 min. The oily liquid after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 4-2").

### <Production of evaluation sample 4-3>

Fructose (manufactured by Kato Kagaku Co., Ltd.) was added to safflower oil (manufactured by Ajinomoto Co., Inc.) to a fructose concentration of 100 weight ppm with respect to the safflower oil. The obtained oily liquid was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 4-3").

### <Production of evaluation sample 4-4>

Fructose (manufactured by Kato Kagaku Co., Ltd.) was added to safflower oil (manufactured by Ajinomoto Co., Inc.) to a fructose concentration of 100 weight ppm with respect to the safflower oil. The obtained oily liquid was heated in a water bath (manufactured by TOKYO RIKAKIKAI CO, LTD) at 100°C for 30 min. The oily liquid after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 4-4").

### <Production of evaluation sample 4-5>

Sodium glutamate (manufactured by Ajinomoto Co., Inc.) and fructose (manufactured by Kato Kagaku Co., Ltd.) were added to safflower oil (manufactured by Ajinomoto Co., Inc.) and dissolved to a sodium glutamate concentration of 100 weight ppm and a fructose concentration of 100 weight ppm with respect to the safflower oil. The obtained oily liquid was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 4-5").

### <Production of evaluation sample 4-6>

Sodium glutamate (manufactured by Ajinomoto Co., Inc.) and fructose (manufactured by Kato Kagaku Co., Ltd.) were added to safflower oil (manufactured by Ajinomoto Co., Inc.) to a sodium glutamate concentration of 100 weight ppm and a fructose concentration of 100 weight ppm with respect to the safflower oil. The obtained oily liquid was heated in a water bath (manufactured by TOKYO RIKAKIKAI CO, LTD) at 100°C for 30 min. The oily liquid after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 4-6").

### <Sensory evaluation>

Sensory evaluation was performed on the strength of the mouth-coating feel and the presence or absence of the off-flavor in the evaluation samples 4-1 to 4-6.

The mouth-coating feel and the off-flavor were respectively evaluated by a method similar to that in Experimental Example 1.

The results are shown in the following Table 5.

**Table 5]**

| evaluation sample | sodium glutamate concentration (weight ppm) in solvent | fructose concentration (weight ppm) in solvent | solvent | whether solvent was heated | strength of mouth-coating feel | off-flavor |
|---|---|---|---|---|---|---|
| 4-1 | 100 | 0 | safflower oil | not heated | 0.7 | none |
| 4-2 | 100 | 0 | safflower oil | heated | 1.9 | none |
| 4-3 | 0 | 100 | safflower oil | not heated | 0.9 | none |
| 4-4 | 0 | 100 | safflower oil | heated | 2.6 | none |
| 4-5 | 100 | 100 | safflower oil | not heated | 1.3 | none |
| 4-6 | 100 | 100 | safflower oil | heated | 3.4 | none |

As is clear from the results of Table 5, the evaluation samples 4-4 and 4-6 of the present invention with an in-oil-heated substance of a substance capable of producing cyclotene by heating (fructose, or fructose and sodium glutamate) added thereto both showed a remarkably improved mouth-coating feel. These evaluation samples did not have an off-flavor.

From the results, it was confirmed that a substance capable of producing cyclotene by heating can effectively enhance the mouth-coating feel without imparting an off-flavor to foods.

### (Experimental Example 5)

### <Positive control and negative control>

For positive control and negative control, commercially available mayonnaise similar to that in Experimental Example 1 was used.

### <Production of evaluation sample 5-1>

Cyclotene (manufactured by Sigma-Aldrich) was added to safflower oil (manufactured by Ajinomoto Co., Inc.) and dissolved to a cyclotene concentration of 100 weight ppm with respect to the safflower oil. The obtained oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 5-1").

### <Production of evaluation sample 5-2>

Cyclotene (manufactured by Sigma-Aldrich) was added to safflower oil (manufactured by Ajinomoto Co., Inc.) and dissolved to a cyclotene concentration of 100 weight ppm with respect to the safflower oil. The obtained oil solution was heated in a water bath (manufactured by TOKYO RIKAKIKAI CO, LTD) at 100°C for 30 min. The oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 5-2").

### <Production of evaluation sample 5-3>

β-Caryophyllene (manufactured by Sigma-Aldrich) was added to safflower oil (manufactured by Ajinomoto Co., Inc.) and dissolved to a β-caryophyllene concentration of 150 weight ppm with respect to the safflower oil. The obtained oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 5-3") .

### <Production of evaluation sample 5-4>

β-Caryophyllene (manufactured by Sigma-Aldrich) was added to safflower oil (manufactured by Ajinomoto Co., Inc.) and dissolved to a β-caryophyllene concentration of 150 weight ppm with respect to the safflower oil. The obtained oil solution was heated in a water bath (manufactured by TOKYO RIKAKIKAI CO, LTD) at 100°C for 30 min. The oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 5-4").

### <Production of evaluation sample 5-5>

Cyclotene (manufactured by Sigma-Aldrich) and β-caryophyllene (manufactured by Sigma-Aldrich) were added to safflower oil (manufactured by Ajinomoto Co., Inc.) and dissolved to a cyclotene concentration of 100 weight ppm and a β-caryophyllene concentration of 150 weight ppm with respect to the safflower oil. The obtained oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 5-5").

### <Production of evaluation sample 5-6>

Cyclotene (manufactured by Sigma-Aldrich) and β-caryophyllene (manufactured by Sigma-Aldrich) were added to safflower oil (manufactured by Ajinomoto Co., Inc.) and dissolved to a cyclotene concentration of 100 weight ppm and a β-caryophyllene concentration of 150 weight ppm with respect to the safflower oil. The obtained oil solution was heated in a water bath (manufactured by TOKYO RIKAKIKAI CO, LTD) at 100°C for 30 min. The oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 5-6").

### <Sensory evaluation>

Sensory evaluation was performed on the strength of the mouth-coating feel and the presence or absence of the off-flavor in the evaluation samples 5-1 - 5-6.

The mouth-coating feel and the off-flavor were respectively evaluated by a method similar to that in Experimental Example 1.

The results are shown in the following Table 6.

**[Table 6]**

| evaluation sample | cyclotene concentration (weight ppm) in solvent | β-caryophyllene concentration (weight ppm) in solvent | solvent | whether solvent was heated | strength of mouth-coating feel | off-flavor |
|---|---|---|---|---|---|---|
| 5-1 | 100 | 0 | safflower oil | not heated | 0.7 | none |
| 5-2 | 100 | 0 | safflower oil | heated | 3.8 | none |
| 5-3 | 0 | 150 | safflower oil | not heated | 0.3 | none |
| 5-4 | 0 | 150 | safflower oil | heated | 2.1 | none |
| 5-5 | 100 | 150 | safflower oil | not heated | 0.8 | none |
| 5-6 | 100 | 150 | safflower oil | heated | 4.3 | none |

As is clear from the results of Table 6, the evaluation sample 5-2 of the present invention with an in-oil-heated substance of cyclotene added thereto, and the evaluation sample 5-6 of the present invention with in-oil-heated substances of cyclotene and β-caryophyllene added thereto both showed a remarkably improved mouth-coating feel. Particularly, the evaluation sample 5-6 showed a most remarkably improved mouth-coating feel. In addition, none of these evaluation samples had an off-flavor.

### (Experimental Example 6)

### <Positive control and negative control>

For positive control and negative control, commercially available mayonnaise similar to that in Experimental Example 1 was used.

### <Production of evaluation samples 6-1, 6-3, 6-5, 6-7, 6-9, 6-11, 6-13, 6-15, 6-17>

Each compound shown in the following Table 7 was added to safflower oil (manufactured by Ajinomoto Co., Inc.) and dissolved to a concentration of each compound of 100 weight ppm with respect to the safflower oil. The obtained each oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce evaluation samples (hereinafter to be respectively referred to as "evaluation sample 6-1", "evaluation sample 6-3", "evaluation sample 6-5", "evaluation sample 6-7", "evaluation sample 6-9", "evaluation sample 6-11", "evaluation sample 6-13", "evaluation sample 6-15", "evaluation sample 6-17").

### <Production of evaluation samples 6-2, 6-4, 6-6, 6-8, 6-10, 6-12, 6-14, 6-16, 6-18>

Each compound shown in the following Table 7 was added to safflower oil (manufactured by Ajinomoto Co., Inc.) and dissolved to a concentration of each compound of 100 weight ppm with respect to the safflower oil. The obtained each oil solution was heated in a water bath (manufactured by TOKYO RIKAKIKAI CO, LTD) at 100°C for 30 min. Each oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce evaluation samples (hereinafter to be respectively referred to as "evaluation sample 6-2", "evaluation sample 6-4", "evaluation sample 6-6", "evaluation sample 6-8", "evaluation sample 6-10", "evaluation sample 6-12", "evaluation sample 6-14", "evaluation sample 6-16", "evaluation sample 6-18").

**[Table 7]**

| evaluation sample | compound | manufacturing company |
|---|---|---|
| 6-1 | 2-Pentanone | Sigma-Aldrich |
| 6-2 | | |
| 6-3 | 2-Pentylfuran | Sigma-Aldrich |
| 6-4 | | |
| 6-5 | 3-Methyl-2-cyclopentenone | Sigma-Aldrich |
| 6-6 | | |
| 6-7 | gamma-Butyrolactone | Sigma-Aldrich |
| 6-8 | | |
| 6-9 | 2-Methyltetrahydrofuran-3-one | Sigma-Aldrich |
| 6-10 | | |
| 6-11 | alpha-Angelicalactone | Penta Manufacturing Company |
| 6-12 | | |
| 6-13 | Ethyl cyclopentenolone | Sigma-Aldrich |
| 6-14 | | |
| 6-15 | 3-Methyl-1,2-cyclohexanedione | Sigma-Aldrich |
| 6-16 | | |
| 6-17 | Maltol | Penta Manufacturing Company |
| 6-18 | | |

### <Sensory evaluation>

Sensory evaluation was performed on the strength of the mouth-coating feel and the presence or absence of the off-flavor in the evaluation samples 6-1 - 6-18.

The mouth-coating feel and the off-flavor were respectively evaluated by a method similar to that in Experimental Example 1.

The results are shown in the following Table 8.

**[Table 8]**

| evaluation sample | compound concentration (weight ppm) in solvent | solvent | whether solvent was heated | strength of mouth-coating feel | off-flavor |
|---|---|---|---|---|---|
| 6-1 | 100 | safflower oil | not heated | 0.4 | none |
| 6-2 | 100 | safflower oil | heated | 0.8 | none |
| 6-3 | 100 | safflower oil | not heated | 0.3 | none |
| 6-4 | 100 | safflower oil | heated | 1.3 | none |
| 6-5 | 100 | safflower oil | not heated | 0.5 | none |
| 6-6 | 100 | safflower oil | heated | 2.8 | none |
| 6-7 | 100 | safflower oil | not heated | 0.5 | none |
| 6-8 | 100 | safflower oil | heated | 2.8 | none |
| 6-9 | 100 | safflower oil | not heated | 0.4 | none |
| 6-10 | 100 | safflower oil | heated | 2.9 | none |
| 6-11 | 100 | safflower oil | not heated | 0.5 | none |
| 6-12 | 100 | safflower oil | heated | 2.7 | none |
| 6-13 | 100 | safflower oil | not heated | 0.6 | none |
| 6-14 | 100 | safflower oil | heated | 3.4 | none |
| 6-15 | 100 | safflower oil | not heated | 0.4 | none |
| 6-16 | 100 | safflower oil | heated | 3.0 | none |
| 6-17 | 100 | safflower oil | not heated | 0.6 | none |
| 6-18 | 100 | safflower oil | heated | 3.1 | none |

As is clear from the results of Table 8, the evaluation samples 6-6, 6-8, 6-10, 6-12, 6-14, 6-16, and 6-18 of the present invention with an in-oil-heated substance of a cyclotene analogous compound (3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol) added thereto all showed a remarkably improved mouth-coating feel. These evaluation samples did not have an off-flavor.

From the results, it was confirmed that an in-oil-heated substance of a cyclotene analogous compound can effectively enhance the mouth-coating feel without imparting an off-flavor to foods.

### (Experimental Example 7)

### <Production of compositions of experimental plots 7-1 to 7-3 and analysis of cyclotene amount>

Water, fructose (manufactured by Kato Kagaku Co., Ltd.), sodium glutamate (manufactured by Ajinomoto Co., Inc.), and safflower oil (manufactured by Ajinomoto Co., Inc.), or water, fructose (manufactured by Kato Kagaku Co., Ltd.), and sodium glutamate (manufactured by Ajinomoto Co., Inc.) were mixed in the amounts shown in the following Table 9 to produce compositions (hereinafter to be respectively referred to as "composition of experimental plot 7-1", "composition of experimental plot 7-2", "composition of experimental plot 7-3").

**[Table 9]**

| experimental plot | water (g) | fructose (g) | sodium glutamate (g) | safflower oil (g) |
|---|---|---|---|---|
| 7-1 | 0.5 | 0.56 | 0.87 | 0.5 |
| 7-2 | 0.6 | 0.67 | 1.04 | 0.4 |
| 7-3 | 1 | 1.12 | 1.73 | |

Each composition of experimental plots 7-1 to 7-3 was heated at 100°C for 90 min, and the amount of cyclotene therein was analyzed before heating and after heating.

Each composition of experimental plots 7-1 to 7-3 was heated using a pressure-resistant vial and an oil bath, and heated while being stirred using a stirring bar.

For the analysis of the amount of cyclotene in each composition of experimental plots 7-1 to 7-3, measurement was performed using a gas chromatograph-mass spectrometer (GC-MS) under the conditions shown below.

### <analysis instrument>

GC-MS; manufactured by Agilent, model number Intuvo 9000 GC System, 5977B MSD
Autosampler (pre-treatment, injecting apparatus); manufactured by GESTEL, model number PAL RTC 120

### <preanalytical treatment>

The sample (each composition of experimental plots 7-1 to 7-3, 1 mL) was placed in a 20 mL vial container with a septum and a solid phase microextraction (SPME) fiber (50/30 um Polyacrylate 57298-U:Gray) was exposed to the headspace section for 30 min while heating to 50°C to cause adsorption of the components.

### <analysis conditions>

column; manufactured by Agilent, DB-WAX (60m×0.25mm×0.25µm)
injecting conditions; 230°C
mode; split (ratio 10:1)
head pressure; initial pressure=21.165 psi, maintained for 3 min, increased to 33.925 psi at 0.425 psi/min, and further increased to 36.389 psi at 6.16 psi/min.
oven conditions; After holding at 50°C for 3 min, the temperature was raised to 200°C at 5°C/min, and further raised to 220°C at 50°C/min.

The results are shown in the following Table 10.

**[Table 10]**

| experimental plot | cyclotene amount before heating (gas chromatograph peak area) | cyclotene amount after heating (gas chromatograph peak area) |
|---|---|---|
| 7-1 | not detected | 1188494.5 |
| 7-2 | not detected | 1067976.9 |
| 7-3 | not detected | 1341727.8 |

Then, sensory evaluation was performed using each composition of experimental plots 7-1 to 7-3.

### <Positive control and negative control>

For positive control and negative control, commercially available mayonnaise similar to that in Experimental Example 1 was used.

### <Production of evaluation samples 7-1 - 7-3>

Respective compositions of experimental plots 7-1 to 7-3 were added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce evaluation samples (hereinafter to be respectively referred to as "evaluation sample 7-1", "evaluation sample 7-2", "evaluation sample 7-3").

### <Sensory evaluation>

Sensory evaluation was performed on the strength of the mouth-coating feel of the evaluation samples 7-1 to 7-3.

The mouth-coating feel was evaluated by a method similar to that in Experimental Example 1.

The results are shown in the following Table 11.

**[Table 11]**

| evaluation sample | strength of mouth-coating feel |
|---|---|
| 7-1 | 2.7 |
| 7-2 | 2.8 |
| 7-3 | 1.4 |

As is clear from the results of Table 10, it was confirmed that cyclotene was produced by heating fructose and sodium glutamate in an oil- or fat-containing composition (mixture of water and safflower oil) or water.

As is clear from the results of Table 11, the evaluation samples 7-1 and 7-2 of the present invention, in which fructose and sodium glutamate were heated in an oil- or fat-containing composition (mixture of water and safflower oil), both showed a remarkably improved mouth-coating feel.

### (Experimental_Example 8)

### <Positive control and negative control>

For positive control and negative control, commercially available mayonnaise similar to that in Experimental Example 1 was used.

### <Production of evaluation sample 8-1>

Sugarcane extract (manufactured by Mitsui Sugar Co., Ltd., product name: sugarcane extract) was dissolved in safflower oil (manufactured by Ajinomoto Co., Inc.) at 1 wt% and the obtained oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 8-1").

### <Production of evaluation sample 8-2>

Sugarcane extract (manufactured by Mitsui Sugar Co., Ltd., product name: sugarcane extract) was dissolved in safflower oil (manufactured by Ajinomoto Co., Inc.) at 1 wt%, and the obtained oil solution was heated in a water bath (manufactured by TOKYO RIKAKIKAI CO, LTD) at 100°C for 30 min. The oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 8-2").

### <Production of evaluation sample 8-3>

Raw sugar (manufactured by Ueno Sugar Co., LTD) was dissolved in safflower oil (manufactured by Ajinomoto Co., Inc.) at 1 wt%, and the obtained oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 8-3").

### <Production of evaluation sample 8-4>

Raw sugar (manufactured by Ueno Sugar Co., LTD) was dissolved in safflower oil (manufactured by Ajinomoto Co., Inc.) at 1 wt%, and the obtained oil solution was heated in a water bath (manufactured by TOKYO RIKAKIKAI CO, LTD) at 100°C for 30 min. The oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce an evaluation sample (hereinafter to be referred to as "evaluation sample 8-4").

### <Sensory evaluation>

Sensory evaluation was performed on the strength of the mouth-coating feel of the evaluation samples 8-1 to 8-4.

The mouth-coating feel was evaluated by a method similar to that in Experimental Example 1.

The results are shown in the following Table 12.

**[Table 12]**

| evaluation sample | material containing cyclotene | solvent | whether solvent was heated | strength of mouth-coating feel |
|---|---|---|---|---|
| 8-1 | sugarcane extract | safflower oil | not heated | 0.1 |
| 8-2 | sugarcane extract | safflower oil | heated | 2.5 |
| 8-3 | raw sugar | safflower oil | not heated | 0.6 |
| 8-4 | raw sugar | safflower oil | heated | 2.8 |

### <Analysis of amount of cyclotene contained in sugarcane extract and raw sugar>

The amount of cyclotene contained in the sugarcane extract and raw sugar used in the production of evaluation samples 8-1 to 8-4 was analyzed.

For the analysis of the amount of cyclotene contained in sugarcane extract and raw sugar, measurement was performed using a gas chromatograph-mass spectrometer (GC-MS) under the conditions shown below.

### <analysis instrument>

GC-MS; manufactured by Agilent, model number Intuvo 9000 GC System, 5977B MSD
Autosampler (pre-treatment, injecting apparatus); manufactured by GESTEL, model number PAL RTC 120

### <preanalytical treatment>

Sugarcane extract and raw sugar were each dissolved in deionized water at 5 wt%, 1 g thereof was placed in a 20 mL vial container, and a solid phase microextraction (SPME) fiber (50/30 um Polyacrylate 57298-U:Gray) was exposed to the headspace section for 30 min while heating each vial container to 50°C to cause adsorption of the components.

### <analysis conditions>

column; manufactured by Agilent, DB-WAX (60m×0.25mm×0.25µm)
injecting conditions; 230°C
mode; split (ratio 10:1)
head pressure; initial pressure=21.165 psi, maintained for 3 min, increased to 33.925 psi at 0.425 psi/min, and further increased to 36.389 psi at 6.16 psi/min.
oven conditions; After holding at 50°C for 3 min, the temperature was raised to 200°C at 5°C/min, and further raised to 220°C at 50°C/min.

The results are shown in the following Table 13.

**[Table 13]**

| | gas chromatograph peak area |
|---|---|
| sugarcane extract | 2786866.1 |
| raw sugar | 5118351.1 |

As is clear from the results of Tables 12 and 13, sugarcane extract and raw sugar each contain an analyzable amount of cyclotene, and evaluation samples 8-2 and 8-4 of the present invention with an in-oil-heated substance of the sugarcane extract or raw sugar added thereto both showed a remarkably improved mouth-coating feel.

### (Reference Example 1)

### <Analysis of amount of cyclotene contained in raw sugar>

The amount of cyclotene contained in the raw sugar (manufactured by Ueno Sugar Co., LTD) used in the production of evaluation samples in Experimental Example 8 was analyzed.

For the analysis of the amount of cyclotene contained in raw sugar, measurement was performed using a gas chromatograph-mass spectrometer (GC-MS) under the conditions shown below.

### <analysis instrument>

GC-MS; manufactured by Agilent, model number Intuvo 9000 GC System, 5977B MSD
Autosampler (pre-treatment, injecting apparatus); manufactured by GESTEL, model number PAL RTC 120

### <preanalytical treatment>

Raw sugar was dissolved in deionized water at 5 wt%, and 1 g was placed in a 20 mL vial container. Cyclotene commercially available as a flavor was dissolved in deionized water at 0.5 weight ppm, 1 weight ppm, or 5 weight ppm, and each was placed in a 20 mL vial container by 1 g. A solid phase microextraction (SPME) fiber (50/30 um Polyacrylate 57298-U:Gray) was exposed to the headspace section for 30 min while heating each vial container to 50°C to cause adsorption of the components.

### <analysis conditions>

column; manufactured by Agilent, DB-WAX (60m×0.25mm×0.25µm)
injecting conditions; 230°C
mode; split (ratio 10:1)
head pressure; initial pressure=21.165 psi, maintained for 3 min, increased to 33.925 psi at 0.425 psi/min, and further increased to 36.389 psi at 6.16 psi/min.
oven conditions; After holding at 50°C for 3 min, the temperature was raised to 200°C at 5°C/min, and further raised to 220°C at 50°C/min.

The results are shown in the following Table 14.

**[Table 14]**

| analysis sample | gas chromatograph peak area |
|---|---|
| cyclotene aqueous solution (concentration :0.5 weight ppm) | 239046.8 |
| cyclotene aqueous solution (concentration: 1 weight ppm) | 524737.8 |
| cyclotene aqueous solution (concentration: 5 weight ppm) | 2252301.3 |
| 5 wt% aqueous solution of raw sugar | 1023670.2 |

From the results of Table 14, it was confirmed that a 5 wt% aqueous solution of raw sugar contains not less than 1 weight ppm of cyclotene.

### (Experimental Example 9)

### <Positive control and negative control>

For positive control and negative control, commercially available mayonnaise similar to that in Experimental Example 1 was used.

### <Production of evaluation samples 9-1, 9-3, 9-5, 9-7, 9-9, 9-11, 9-13, 9-15, 9-17, 9-19, 9-21, 9-23>

Each compound (manufactured by Sigma-Aldrich) shown in the following Table 15 was added to safflower oil (manufactured by Ajinomoto Co., Inc.) and dissolved to a concentration of each compound of 100 weight ppm with respect to the safflower oil. The obtained each oil solution was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce evaluation samples (hereinafter to be respectively referred to as "evaluation sample 9-1", "evaluation sample 9-3", "evaluation sample 9-5", "evaluation sample 9-7", "evaluation sample 9-9", "evaluation sample 9-11", "evaluation sample 9-13", "evaluation sample 9-15", "evaluation sample 9-17", "evaluation sample 9-19", "evaluation sample 9-21", "evaluation sample 9-23").

### <Production of evaluation samples 9-2, 9-4, 9-6, 9-8, 9-10, 9-12, 9-14, 9-16, 9-18, 9-20, 9-22, 9-24>

Each compound (manufactured by Sigma-Aldrich) shown in the following the following Table 15 was added to safflower oil (manufactured by Ajinomoto Co., Inc.) and dissolved to a concentration of each compound of 100 weight ppm with respect to the safflower oil. The obtained each oil solution was heated in a water bath (manufactured by TOKYO RIKAKIKAI CO, LTD) at 100°C for 30 min. Each oil solution after heating was added at 0.1 wt% to the aforementioned commercially available mayonnaise (manufactured by Ajinomoto Co., Inc., trade name "Pure Select (registered trade mark) KOKUUMA (registered trade mark) 65% Calorie Cut", oil and fat content: 23%) used as the negative control to produce evaluation samples (hereinafter to be respectively referred to as "evaluation sample 9-2", "evaluation sample 9-4", "evaluation sample 9-6", "evaluation sample 9-8", "evaluation sample 9-10", "evaluation sample 9-12", "evaluation sample 9-14", "evaluation sample 9-16", "evaluation sample 9-18", "evaluation sample 9-20", "evaluation sample 9-22", "evaluation sample 9-24").

**[Table 15]**

| evaluation sample | compound |
|---|---|
| 9-1 | Dihydro-5-octyl-2(3H)-furanone |
| 9-2 | |
| 9-3 | 6-Heptyltetrahydro-2H-pyran-2-one |
| 9-4 | |
| 9-5 | 4-(Acetoxy)-2,5-dimethyl-3(2H)-furanone |
| 9-6 | |
| 9-7 | Methyl 3-Oxo-2-pentyl-1-cyclopentaneacetate |
| 9-8 | |
| 9-9 | 4,5-Dimethyl-3-hydroxy-2(5H)-furanone |
| 9-10 | |
| 9-11 | (1R,4R)-1,7,7-trimethyl-bicyclo[2.2.1]heptan-2-one |
| 9-12 | |
| 9-13 | (5R)-2-Methyl-5-(1-methylethenyl)-2-cyclohexen-1-one |
| 9-14 | |
| 9-15 | 2,5-Dimethyl-4-methoxy-3(2H)-furanone |
| 9-16 | |
| 9-17 | D-erythro-Hex-2-enoic acid γ-lactone |
| 9-18 | |
| 9-19 | 3,4-Dimethyl-1,2-cyclopentanedione |
| 9-20 | |
| 9-21 | 3,4-Dihydro-2H-1-benzopyran-2-one |
| 9-22 | |
| 9-23 | 3-Propylidene-1(3H)-isobenzofuranone |
| 9-24 | |

### <Sensory evaluation>

Sensory evaluation was performed on the strength of the mouth-coating feel of the evaluation samples 9-1 to 9-24.

The mouth-coating feel was evaluated by a method similar to that in Experimental Example 1.

The results are shown in the following Table 16.

**[Table 16]**

| evaluation sample | compound concentration (weight ppm) in solvent | solvent | whether solvent was heated | strength of mouth-coating feel |
|---|---|---|---|---|
| 9-1 | 100 | safflower oil | not heated | 0.5 |
| 9-2 | 100 | safflower oil | heated | 2.6 |
| 9-3 | 100 | safflower oil | not heated | 0.4 |
| 9-4 | 100 | safflower oil | heated | 2.8 |
| 9-5 | 100 | safflower oil | not heated | 0.5 |
| 9-6 | 100 | safflower oil | heated | 2.9 |
| 9-7 | 100 | safflower oil | not heated | 0.5 |
| 9-8 | 100 | safflower oil | heated | 2.7 |
| 9-9 | 100 | safflower oil | not heated | 0.3 |
| 9-10 | 100 | safflower oil | heated | 2.5 |
| 9-11 | 100 | safflower oil | not heated | 0.7 |
| 9-12 | 100 | safflower oil | heated | 2.7 |
| 9-13 | 100 | safflower oil | not heated | 0.4 |
| 9-14 | 100 | safflower oil | heated | 2.5 |
| 9-15 | 100 | safflower oil | not heated | 0.3 |
| 9-16 | 100 | safflower oil | heated | 2.1 |
| 9-17 | 100 | safflower oil | not heated | 0.4 |
| 9-18 | 100 | safflower oil | heated | 2.6 |
| 9-19 | 100 | safflower oil | not heated | 0.5 |
| 9-20 | 100 | safflower oil | heated | 2.5 |
| 9-21 | 100 | safflower oil | not heated | 0.4 |
| 9-22 | 100 | safflower oil | heated | 2.3 |
| 9-23 | 100 | safflower oil | not heated | 0.7 |
| 9-24 | 100 | safflower oil | heated | 3.1 |

As is clear from the results of Table 16, the evaluation samples 9-2, 9-4, 9-6, 9-8, 9-10, 9-12, 9-14, 9-16, 9-18, 9-20, 9-22 and 9-24 of the present invention containing an in-oil-heated substance of a cyclotene analogous compound (dihydro-5-octyl-2(3H)-furanone, 6-heptyltetrahydro-2H-pyran-2-one, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, (1R,4R)-1,7,7-trimethyl-bicyclo[2.2.1]heptan-2-one, (5R)-2-methyl-5-(1-methylethenyl)-2-cyclohexen-1-one, 2,5-dimethyl-4-methoxy-3(2H)-furanone, D-erythro-hex-2-enonic acid γ-lactone, 3,4-dimethyl-1,2-cyclopentanedione, 3,4-dihydro-2H-1-benzopyran-2-one, 3-propylidene-1(3H)-isobenzofuranone) added thereto all showed a remarkably improved mouth-coating feel. These evaluation samples did not have an off-flavor.

From the results, it was confirmed that an in-oil-heated substance of a cyclotene analogous compound can effectively enhance the mouth-coating feel without imparting an off-flavor.

### [Industrial Applicability]

According to the present invention, a mouth-coating feel enhancer capable of effectively enhancing a mouth-coating feel and a production method thereof can be provided. According to the present invention, moreover, a mouth-coating feel enhancer capable of effectively enhancing a mouth-coating feel without imparting an off-flavor and a production method thereof can be provided.

According to the present invention, a food with an effectively enhanced mouth-coating feel and a production method thereof can be provided. According to the present invention, moreover, a food with an effectively enhanced mouth-coating feel and without an off-flavor, and a production method thereof can be provided.

According to the present invention, a method for effectively enhancing a mouth-coating feel can be provided. According to the present invention, moreover, a method for effectively enhancing a mouth-coating feel without imparting an off-flavor can be provided.

This application is based on a patent application No. 2020-152962 filed in Japan (filing date: September 11, 2020), the contents of which are incorporated in full herein.

## Claims

1. A mouth-coating feel enhancer comprising an in-oil-heated substance of cyclotene, an in-oil-heated substance of a cyclotene analogous compound, or an in-oil-heated substance of a substance capable of producing cyclotene or a cyclotene analogous compound by heating.

2. The mouth-coating feel enhancer according to claim 1, wherein the cyclotene analogous compound is a compound (excluding cyclotene) represented by the formula (I): 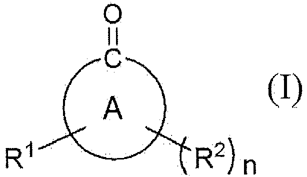 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3.

3. The mouth-coating feel enhancer according to claim 1 or 2, wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadien-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.

4. The mouth-coating feel enhancer according to any one of claims 1 to 3, wherein the substance capable of producing cyclotene or a cyclotene analogous compound by heating comprises at least one saccharide selected from the group consisting of ribose, xylose, arabinose, glucose, fructose, sucrose, maltose, and lactose.

5. The mouth-coating feel enhancer according to claim 4, wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.

6. The mouth-coating feel enhancer according to any one of claims 1 to 5, further comprising a heated substance of β-caryophyllene or a heated substance of a β-caryophyllene analogous compound.

7. The mouth-coating feel enhancer according to any one of claims 1 to 6, wherein the enhancer is for a food containing oil or fat.

8. A method for enhancing a mouth-coating feel, comprising adding an in-oil-heated substance of cyclotene, an in-oil-heated substance of a cyclotene analogous compound, or an in-oil-heated substance of a substance capable of producing cyclotene or a cyclotene analogous compound by heating.

9. The enhancing method according to claim 8, wherein the cyclotene analogous compound is a compound (excluding cyclotene) represented by the formula (I): 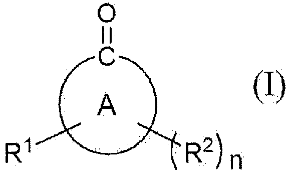 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3.

10. The enhancing method according to claim 8 or 9, wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadiene-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.

11. The enhancing method according to any one of claims 8 to 10, wherein the substance capable of producing cyclotene or a cyclotene analogous compound by heating comprises at least one saccharide selected from the group consisting of ribose, xylose, arabinose, glucose, fructose, sucrose, maltose, and lactose.

12. The enhancing method according to claim 11 wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.

13. The enhancing method according to any one of claims 8 to 12, further comprising adding a heated substance of β-caryophyllene or a heated substance of a heated substance of a β-caryophyllene analogous compound.

14. The enhancing method according to any one of claims 8 to 13, wherein the method is a method for enhancing a mouth-coating feel of a food containing oil or fat.

15. A method for producing a food, comprising adding an in-oil-heated substance of cyclotene, an in-oil-heated substance of a cyclotene analogous compound, or an in-oil-heated substance of a substance capable of producing cyclotene or a cyclotene analogous compound by heating.

16. The production method according to claim 15, wherein the cyclotene analogous compound is a compound (excluding cyclotene) represented by the formula (I): 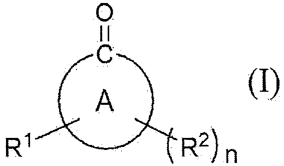 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3.

17. The production method according to claim 15 or 16,
wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadiene-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.

18. The production method according to any one of claims 15 to 17, wherein the substance capable of producing cyclotene or a cyclotene analogous compound by heating comprises at least one saccharide selected from the group consisting of ribose, xylose, arabinose, glucose, fructose, sucrose, maltose, and lactose.

19. The production method according to claim 18, wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.

20. The production method according to any one of claims 15 to 19, further comprising adding a heated substance of β-caryophyllene or a heated substance of a β-caryophyllene analogous compound.

21. The production method according to any one of claims 15 to 20, wherein the food is a food with an enhanced mouth-coating feel.

22. The production method according to any one of claims 15 to 21, wherein the food is a food comprising an oil or fat.

23. A food comprising an in-oil-heated substance of cyclotene, an in-oil-heated substance of a cyclotene analogous compound, or an in-oil-heated substance of a substance capable of producing cyclotene or a cyclotene analogous compound by heating.

24. A method for producing a mouth-coating feel enhancer, comprising heating at least one selected from the group consisting of cyclotene, a cyclotene analogous compound, and a substance capable of producing cyclotene or a cyclotene analogous compound by heating in an oil- or fat-containing composition.

25. The production method according to claim 24, wherein the cyclotene analogous compound is a compound (excluding cyclotene) represented by the formula (I): 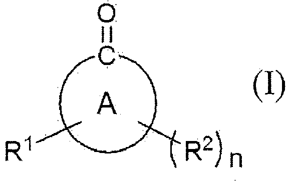 wherein
ring A is a 5-membered or 6-membered, saturated or unsaturated, carbocycle or oxygen-containing or nitrogen-containing heterocycle;
R¹ is an oxo group, a hydroxy group, an alkoxy group having 1 - 4 carbon atoms, an acyloxy group having 1 - 4 carbon atoms, a hydrocarbon group having 1 - 8 carbon atoms and optionally having substituent(s), or a hydrogen atom, and when R¹ is a hydrocarbon group having 1 - 8 carbon atoms and optionally having substituent(s), a carbon atom in the hydrocarbon group may be bonded to a carbon atom of ring A to form a crosslinked structure or a saturated or unsaturated ring structure;
R² is a hydrocarbon group having 1 - 8 carbon atoms, a hydroxy group, or a hydrogen atom; and
n is an integer of 1 to 3.

26. The production method according to claim 24 or 25,
wherein the cyclotene analogous compound is at least one compound selected from the group consisting of 3-methyl-2-cyclopentenone, γ-butyrolactone, 2-methyltetrahydrofuran-3-one, α-angelicalactone, ethyl cyclopentenolone, 3-methyl-1,2-cyclohexanedione, maltol, tetrahydropyran-3-one, 2,5-cyclohexadien-1-one, 4-methylpyrrolidin-2-one, 2-methyl-2,4-cyclopentadiene-1-one, 4-ethylpiperidin-2-one, 1-methylpiperidin-3-one, tetrahydro-3-methylpyran-2-one, dihydro-5-octyl-2(3H)-furanone, 6-heptyltetrahydro-2H-pyran-2-one, 2,5-dimethyl-4-methoxy-3(2H)-furanone, D-erythro-hex-2-enonic acid γ-lactone, 4-(acetoxy)-2,5-dimethyl-3(2H)-furanone, methyl 3-oxo-2-pentyl-1-cyclopentaneacetate, 4,5-dimethyl-3-hydroxy-2(5H)-furanone, 3,4-dimethyl-1,2-cyclopentanedione, (1R,4R)-1,7,7-trimethyl-bicyclo[2.2.1]heptan-2-one, 3,4-dihydro-2H-1-benzopyran-2-one, (5R)-2-methyl-5-(1-methylethenyl)-2-cyclohexen-1-one, 3-propylidene-1(3H)-isobenzofuranone, and 3,5,5-trimethyl-2-cyclohexen-1-one.

27. The production method according to any one of claims 24 to 26, wherein the substance capable of producing cyclotene or a cyclotene analogous compound by heating comprises at least one saccharide selected from the group consisting of ribose, xylose, arabinose, glucose, fructose, sucrose, maltose, and lactose.

28. The production method according to claim 27, wherein the substance capable of producing cyclotene or a cyclotene analogous compound by heating further comprises at least one amino acid or a salt thereof selected from the group consisting of aspartic acid, glutamic acid, methionine, valine, and histidine, and a salt thereof.

29. The production method according to any one of claims 24 to 28, wherein a heating temperature of at least one selected from the group consisting of cyclotene, a cyclotene analogous compound, and a substance capable of producing cyclotene or a cyclotene analogous compound by heating is 40 to 200°C, and a heating time thereof is 0.1 to 3840 min.

30. The production method according to any one of claims 24 to 29, further comprising heating at least one compound selected from the group consisting of β-caryophyllene and a β-caryophyllene analogous compound.

31. The production method according to any one of claims 24 to 30, wherein the mouth-coating feel enhancer is for a food containing oil or fat.
